# EUROPÄISCHE PATENTSCHRIFT

(11) **EP 3 452 731 B1**
(45) Veröffentlichungstag und Bekanntmachung des Hinweises auf die Patenterteilung: **21.10.2020**
(21) Anmeldenummer: 17720150.6
(22) Anmeldetag: 02.05.2017
(51) Int. Cl.: F16B 5/06, F16B 45/00, A63B 5/11, A63B 21/055

(54) **BEFESTIGUNGSVORRICHTUNG FÜR TRAMPOLIN**
FASTENING DEVICE FOR TRAMPOLINE
DISPOSITIF DE FIXATION POUR TRAMPOLINE

(30) Priorität: 02.05.2016 EP 16167862
(43) Veröffentlichungstag der Anmeldung: 13.03.2019
(73) Patentinhaber: Angehrn AG Umformtechnik, 9113 Degersheim (CH)
(72) Erfinder: BISANG, Erwin, 6331 Hünenberg (CH); DURRER-KUETTEL, Ludwig, 6405 Immensee (CH); MEHR, Christian, 9533 Kirchberg (CH); SCHWARZ, Silvan, 9620 Lichtensteig (CH)
(74) Vertreter: Liebetanz, Michael
(86) Internationale Anmeldenummer: PCT/EP2017/060388
(87) Internationale Veröffentlichungsnummer: WO 2017/191119

(56) Entgegenhaltungen:
- WO-A1-00/09294
- US-A- 3 356 366
- US-A1- 2013 014 352
- US-A1- 2013 316 876

## Beschreibung

### TECHNISCHES GEBIET

Die vorliegende Erfindung befasst sich mit einem Seilhaken einer Befestigungsvorrichtung für ein Trampolin, mit einer solchen Befestigungsvorrichtung für das Einsetzen einer Schwungmatte des Trampolins in die Rahmenvorrichtung des Trampolins.

### STAND DER TECHNIK

Trampoline, bspw. Minitrampoline, welche zur Gesundheitsförderung und zu Therapiezwecken genutzt werden, benötigen für die Befestigung und Spannung bzw. Montage der Schwungmatte ein geeignetes und schwingfähiges Befestigungssystem.

Es ist bekannt, die Schwungmatte mithilfe von Stahlfedern in Rahmenvorrichtungen von Minitrampolinen zu befestigen. Stahlfeder-basierte Aufhängungen haben jedoch den Nachteil, die Schwungmatte sehr straff zu spannen. Zudem verursachen die Stahlfedern bei der Benutzung des Trampolins störende Quietsch-Geräusche. Beim Schwingen oder leichten Springen auf Stahlfeder-Minitrampolinen beträgt eine Einsinktiefe der trainierenden Person in der Matte bloss ca. 20 Millimeter bis 60 Millimeter, was dem dämpfenden Bremsweg beim Aufprall entspricht. Die Aufprallkräfte werden mit der Stahlfeder-Bespannung nur geringfügig reduziert. Gelenke und die Wirbelsäule werden beim Training auf Geräten mit einer derartigen Aufhängung der Schwungmatte darum erheblichen Belastungen ausgesetzt.

DE 102 26 707 A1 beschreibt eine Bespannung, welche mit elastischen Seilschlaufen und Seilhaken statt mit Stahlfedern arbeitet. Die Gummiseil-Methode bietet eine deutlich grössere Elastizität, also längere Dämpfungswege und deshalb weichere Dämpfungseigenschaften, welche insbesondere im Physiotherapiebereich oftmals bevorzugt werden. Die Einsinktiefe bei Minitrampolinen wird also vergrössert und kann ca. 100 Millimeter bis 250 Millimeter betragen. Dies ermöglicht eine harmonischere Schwingung und ein sanfteres Abbremsen.

Aus der EP 2 540 352 wurde eine Weiterentwicklung eines Seilhakens für Trampoline bekannt. Die Weiterentwicklung schlägt vor, einen Haken mit einem ersten und einem zweiten Aufnahmeabschnitt bereitzustellen, wobei die beiden Aufnahmeabschnitte durch einen Steg mit einem rückwärtigen Laschenelement getrennt voneinander sind. Das Laschenelement wird an der Matte des Trampolins befestigt. Es werden Seilschlaufen verwendet, welche aus einem Gummiseilabschnitt geformt sind, wobei Endabschnitte des Seilabschnitts in entgegengesetzte Richtungen zeigend überlappend übereinander gelegt und zu einem Ring fixiert werden. Zur Fixierung der Seilschlaufe werden in der Überlappungszone zwei Wurstklammem mit einem Abstand von 10 Millimeter bis 12 Millimeter auf die gegeneinander verlaufenden Endabschnitte übergreifend nebeneinander angeordnet und fest verpresst. Bei der Bespannung wird die Seilschlaufe in den ersten Aufnahmeabschnitt eingehängt, um die Rahmenvorrichtung geschlungen, zurück zum Haken geführt und dort im zweiten Aufnahmeabschnitt eingehängt. Der die ersten und zweiten Aufnahmeabschnitte trennende Steg stellt sicher, dass die im ersten Aufnahmeabschnitt und im zweiten Aufnahmeabschnitt befindlichen Seilabschnitte getrennt voneinander gelagert sind und nicht aneinander reiben, womit die Verschleissfestigkeit verbessert ist. Von dieser Doppelhakenkonstruktion gehen somit vier Seilabschnitte der Seilschlaufe ab, welche die Matte mit dem Rahmen verspannen.

Von diesen vier vom Haken abgehenden Seilabschnitten, haben deren drei eine gleich lange aktive Zugstrecke. Der vierte Seilabschnitt weist das oben beschriebene Wurstklammerpaket auf, was dessen aktive Zugstrecke nachteiligerweise reduziert. Mitten in der Zugstrecke entsteht durch die Klammer ein steifer Block, welcher die für die Dehnung zur Verfügung stehende Gummistrecke um ca. 20 Millimeter verkürzt. Dies kann mehr als 20 Prozent der betreffenden Teilseilstrecke betreffen.

Aufgrund der daraus folgenden Zuglängen-Differenz verhalten sich die Seilabschnitte der gespannten Seilschlaufe unterschiedlich unter Belastung. Der vierte Seilabschnitt mit den Wurstklammern wird im Vergleich zu den anderen drei Seilabschnitten wesentlich stärker beansprucht und erreicht unter Belastung aufgrund der verkürzten aktiven Gummiseilstrecke schneller die maximale Dehnungslänge. Dies beeinflusst einerseits die Schwingungsqualität, weil nicht das komplette Dehnungspotential des Gummis gleichmässig zur Erzeugung der Schwingung genutzt werden kann. Anderseits führt die früher eintretende Überdehnung des vierten Seilabschnittes zu einer rascheren Beanspruchungsalterung, womit die Seilschlaufe vorzeitig ausgetauscht werden muss.

Dokument US2013316876 zeigt einen Seilhaken aus Metall mit einem Ausnahmeabschnitt zur Aufnahme von zwei Teilen einer Seilschlaufe, wobei die Geometrie so gestaltet ist, dass die Zugkräfte mittig zwischen den vier abgehenden Teilen der Seilschlaufe angeordnet sind.

### DARSTELLUNG DER ERFINDUNG

Es ist eine Aufgabe der vorliegenden Erfindung, einen Seilhaken anzugeben, welcher die Befestigung einer Schwungmatte in einem Trampolinrahmen weiter verbessert.

Diese Aufgabe wird durch einen Seilhaken nach Anspruch 1 gelöst. Demgemäss wird ein Seilhaken zur Befestigung einer Schwungmatte an einem Trampolinrahmen mittels einer Seilschlaufe und mindestens eines flexiblen Bandelements, vorgeschlagen. Der Seilhaken umfasst dabei folgende Merkmale:
einen distalen Aufnahmeabschnitt, wobei der Aufnahmeabschnitt sich entlang einer ersten Richtung erstreckt und einen Aufnahmeraum zur Aufnahme eines ersten und eines zweiten Schlaufenendabschnitts der Seilschlaufe definiert;
einen proximalen Befestigungsabschnitt, welcher sich entlang einer zweiten Richtung erstreckt und derart ausgebildet ist, dass ein distaler Endabschnitt des mindestens einen flexiblen Bandelements daran befestigbar ist und durch Zug an einem proximalen Endabschnitt des mindestens einen flexiblen Bandelements ein Hauptzugvektor definiert ist;
einen Ubergangsabschnitt, welcher den Aufnahmeabschnitt und den Befestigungsabschnitt verbindet und den Aufnahmeraum einseitig begrenzt;
wobei der Seilhaken so ausgebildet ist, dass eine Gerade durch den Hauptzugvektor des mit der Seilschlaufe und dem mindestens einen flexiblen Bandelement bestimmungsgemäss verspannten Seilhakens den Aufnahmeraum derart in einen ersten Teilraum und einen zweiten Teilraum unterteilt, dass im bestimmungsgemässen Gebrauch des Seilhakens der erste Schlaufenendabschnitt im ersten Teilraum und der zweite Schlaufenendabschnitt im zweiten Teilraum liegt, wobei der Seilhaken als ein einstückiges Kunststoffteil geformt ist; und
einen mittig in den Aufnahmeraum ragenden Vertikalkamm zur Zentrierung eines Klemmbereichs einer Seilschlaufe im Aufnahmeraum aufweist; oder
mindestens ein den Aufnahmeraum einengendes Anlageelement vorgesehen ist, welches derart auf dem Ubergangsabschnitt angeordnet ist, dass sich das Anlageelement in Richtung des Hauptzugrektors vom Aufnahmeabschnitt beanstandet und zumindest abschnittsweise parallel zum Aufnahmeabschnitt entlang der ersten Richtung vom Ubergangsabschnitt wegerstreckt und den ersten Teilraum und vorzugsweise auch den zweiten Teilraum des Aufnahmeraums seitlich proximal begrenzt und zur Zentrierung eines Klemmbereichs einer Seilschlaufe im Aufnahmeraum geeignet ist.

Die Aufgabe wird hierbei dadurch gelöst, dass der Seilhaken so ausgebildet ist, dass eine Gerade durch den Hauptzugvektor des mit der Seilschlaufe und dem mindestens einen vorzugsweise flexiblen Bandelement bestimmungsgemäss verspannten Seilhakens bei sich nicht durch einen Benutzer belasteten Trampolins den Aufnahmeraum derart in einen ersten Teilraum und einen zweiten Teilraum unterteilt, dass im bestimmungsgemässen Gebrauch des Seilhakens der erste Schlaufenendabschnitt im ersten Teilraum und der zweite Schlaufenendabschnitt im zweiten Teilraum liegt.

Der Erfindung liegt unter anderem die Erkenntnis zugrunde, dass ein seitlich wegweichender Übergangsabschnitt vorteilhaft für die Ausgestaltung des Seilhakens ist. Insbesondere können dadurch Querkräfte auf den Seilhaken vermindert werden, welche den Haken beim bestimmungsgemässen Gebrauch verkippen.

Der Seilhaken ist hierbei als Einzelhaken ausgestaltet, d.h. der Seilhaken verfügt über einen einzelnen Aufnahmeabschnitt in welchen die Schlaufenendabschnitte angehängt werden. Der Aufnahmeabschnitt definiert den Aufnahmeraum, wobei der Aufnahmeraum ein zusammenhängender Raum ohne strukturelle Trennung ist, so dass der erste Teilraum und der zweite Teilraum nur virtuell voneinander getrennt sind und nicht, wie es beispielsweise die EP 2 540 352 lehrt, durch das Anordnen von strukturellen Merkmalen wie etwa des Steges, welcher Steg den Aufnahmeraum in getrennte Aufnahmeräume aufteilt. Die EP 2 540 352 lehrt in diesem Sinne also einen Doppelhaken, also einen Haken mit zwei vollständig getrennten Aufnahmeabschnitten, die getrennte Aufnahmeräume für jeweils einen Schlaufenendabschnitt bereitstellen.

Im Kontext der vorliegenden Erfindung ist unter dem Ausdruck "*Hauptzugvektor*" ein Vektor im mathematischen Sinne zu verstehen, welcher sich vom effektiven Ansatzpunkt einer resultierenden Kraft, welche durch das mindestens eine Bandelement auf den Seilhaken ausgeübt oder übertragen wird, parallel zur Richtung der resultierenden Kraft gegen die Schwungmatte erstreckt. Diese Betrachtung mit dem Hauptzugvektor wird in Spannlage vorgenommen, wenn kein Fremdgewicht auf die Schwungmatte wirkt. Wenn beispielsweise der Befestigungsabschnitt zwei getrennte Teilabschnitte zur Aufnahme von zwei in Spannlage parallel zueinander verlaufenden und jeweils die gleiche Kraft auf den Seilhaken ausübenden Bandelementen bereitstellt, so ist der effektive Ansatzpunkt im Wesentlichen der Mittelpunkt der Verbindungsstrecke der beiden getrennten Teilabschnitte. Aufgrund der Wirkung der resultierenden Kraft wird ein proximaler Hakenabschnitt blockiert und ein distaler Hakenabschnitt, der Aufnahmeabschnitt, im Wesentlichen vertikal gegen die Zugkraft in Richtung des Trampolinrahmens gesetzt.

In einer Weiterbildung ist dieser Seilhaken derart ausgestaltet, dass die erste Richtung und die zweite Richtung quer zueinander verlaufen. Ein Winkel zwischen den beiden Richtungen kann hierbei beispielsweise 80° bis 100° und insbesondere 90° betragen. Hierbei kann der Befestigungsabschnitt entweder senkrecht zum Hauptzugvektor oder parallel zum Hauptzugvektor verlaufen. Besonders bevorzugt ist, wenn der Befestigungsabschnitt sowohl senkrecht zum Aufnahmeabschnitt, d.h. zur ersten Richtung, und senkrecht zum Hauptzugvektor angeordnet ist. Dies erlaubt, dass der Befestigungsabschnitt seinerseits eine hakenartige Funktion übernehmen kann, wobei das Bandelement als Schlaufe mit einem distalen und einem proximalen Ende ausgebildet sein kann, wobei das distale Bandelementende einfach über den gesamten oder einen Teil des Befestigungsabschnittes geschoben wird und das proximale Ende des Bandelementes mit der Schwungmatte verbunden wird.

Vorzugsweise ist der Seilhaken weiter derart ausgebildet, dass die Gerade durch den Hauptzugvektor mittig bezüglich einer Längserstreckung entlang der ersten Richtung auf den Aufnahmeabschnitt trifft. Durch diese Ausgestaltung wird der Aufnahmeraum in zwei inetwa gleichgrosse Teilräume aufgeteilt, d.h. dass der erste Aufnahmeraum inetwa gleichgross wie der zweite Aufnahmeraum ist. Dadurch kann ein kompakter Seilhaken bereitgestellt werden.

In einer abermaligen Weiterbildung des Seilhakens trifft die Gerade durch den Hauptzugvektor mittig bezüglich einer Längserstreckung entlang der zweiten Richtung auf den Befestigungsabschnitt.

Besonders bevorzugt wird, wenn eine Mitte des Aufnahmeabschnittes und eine Mitte des Befestigungsabschnittes auf der Geraden liegt. Dadurch tritt bei der bestimmungsgemässen Benutzung nur ein minimales auf den Seilhaken wirkendes Verdrehmoment auf.

In einem Beispiel, das nicht durch die Ansprüche gedeckt ist, ist der Seilhaken aus einem einstückigen Drahtelement geformt. Dies lässt sowohl eine besonders einfache und kosteneffiziente Herstellung eines robusten Hakens zu.

In einer Weiterbildung, die ebenfalls nicht von den Ansprüchen gedeckt ist, wird der Drahthaken mit einer Zusatzhülse versehen. Diese Zusatzhülse kann aus Kunststoff oder einem anderen Material, gefertigt sein. Die Zusatzhülse kann insbesondere einstückig ausgebildet sein. Die Zusatzhülse weist einen Querschnitt auf, welcher grösser ist als der Drahtquerschnitt. Entsprechend kann die Zusatzhülse über dem den Aufnahmeraum bereitstellenden Drahtabschnitt, den Aufnahmeabschnitt, angeordnet werden und umgibt diesen mindestens gegen den Aufnahmeraum und vorzugsweise zu beiden Seiten. Die Zusatzhülse kann beispielsweise auf den Aufnahmeabschnitt aufklick- oder steckbar bereitgestellt sein. Die in den Aufnahmeraum eingesetzte Zusatzhülse definiert dann den ersten und zweiten Teilraum und vergrössert den effektiven Querschnitt des Hakens im Bereich des ersten und zweiten Teilraumes, also ebenda wo Seilabschnitte der Seilschlaufe zu liegen kommen. Durch die Querschnittserweiterung werden die vom Seilhaken abgehenden Seilabschnitte der Seilschlaufe räumlich weiter voneinander getrennt, was eine nachteilige Berührung der Seilabschnitte unter rhythmischer Belastung verhindert.

Vorzugsweise weist die Zusatzhülse einen mittig in den Aufnahmeraum, also in die Proximalrichtung, ragenden Vertikalkamm auf. Der Vertikalkamm kann sich durchgehend vom ersten Teilraum in den zweiten Teilraum erstrecken, kann aber auch unterbrochen sein. Ein solcher Vertikalkamm kann bei jeder unten beschriebenen Ausführungsform vorgesehen sein.

Die im Kontext der vorliegenden Anmeldung beschriebenen Vertikalkämme können beispielsweise eine Kammhöhe und -breite von 1 Millimeter bis 5 Millimeter aufweisen. Vorzugsweise ist ihr freies, proximal gerichtetes Ende gerundet ausgebildet, sodass der Seilschlaufe keine scharfen Kanten entgegenstehen. Die Funktion des Vertikalkamms wird unten noch genauer beschrieben.

Der Seilhaken ist als einstückiges Kunststoffteil geformt, kann aber als Beispiel, das nicht als Teil der Erfindung gilt, als Metallteil geformt sein. Auch dieser Haken kann in einer Weiterbildung einen im Aufnahmeraum sich vorzugsweise vom ersten Teilraum in den zweiten Teilraum erstreckenden Vertikalkamm zur Zentrierung eines Klemmbereichs einer Seilschlaufe im Aufnahmeraum aufweisen.

Um die Funktion der Zentrierung des Klemmbereichs zu erreichen, kann die Schlaufe nicht von nur innen heraus durch den Vertikalkamm, sondern auch von ausserhalb der Schlaufe durch das Vorsehen von mindestens einem seitlich angeordneten Anlageelement auf dem Übergangsabschnitt des Seilhaken erreicht werden. Das Anlageelement ist derart angeordnet, dass ein Klemmbereich eines angehängten Seilschlaufenendabschnittes am Anlageelement anliegt und somit dort fixiert ist. Vorzugsweise sind auf beiden Seiten des Klemmbereichs Anlageelemente auf dem Übergangsabschnitt angeordnet, so dass der Klemmbereich zu beiden Seiten fixiert ist.

Das Anlageelement erstreckt sich vorzugsweise in Richtung des Hauptzugvektors vom Aufnahmeabschnitt beanstandet und zumindest abschnittsweise parallel zum Aufnahmeabschnitt entlang der ersten Richtung vom Übergangsabschnitt weg. Die Abtragungshöhe vom Übergangsabschnitt kann hier so gewählt sein, dass lediglich der erste Teilraum oder vorzugsweise der erste Teilraum und der zweite Teilraum teilweise oder vollständig seitlich proximal begrenzt ist/sind, sodass die Zentrierung des Klemmbereichs der Seilschlaufe an dem einen Anlageelement oder zwischen den zwei Anlageelementen gewährleistet ist.

Je nach Ausführungsform kann ein Vertikalkamm und/oder ein oder zwei seitlich angeordnete Anlageelemente vorgesehen sein. Es ist somit ein weiterer Aspekt der vorliegenden Erfindung, einen Vertikalkamm und/oder mindestens ein seitliches Anlageelement vorzusehen, sodass eine Seitenführungsanordnung gebildet ist, welche einen Klemmbereich, d.h. eine Verbindungsstelle, der Schlaufe gegen seitliches Verrücken der Schlaufe entlang der Schlaufe sichert.

Es ist eine weitere Aufgabe der vorliegenden Erfindung, ein Befestigungssystem anzugeben, welches die Befestigung einer Schwungmatte in einem Trampolinrahmen verbessert.

Diese Aufgabe wird durch einen Seilhaken nach Anspruch 5 gelöst. Demgemäss wird ein Befestigungssystem zur Befestigung einer Schwungmatte an einem Trampolinrahmen vorgeschlagen, wobei das Befestigungssystem eine Vielzahl von Seilhaken wie oben im Kontext mit der Erfindung beschrieben und eine Vielzahl von vorzugsweise elastischen Seilschlaufen umfasst.

Vorzugsweise besteht das Befestigungssystem aus gleich vielen solchen Seilhaken wie elastische Seilschlaufen und mindestens einem flexiblen Bandelement für jeden Seilhaken.

Das Bandelement kann beispielsweise aus einem gewobenen oder nicht gewobenen Textil und/oder einer ein- oder mehrlagigen Kunststofffolie bestehen. Vorzugsweise ist das Bandelement flexibel aber bezüglich seiner Länge wenig oder nicht elastisch. Es ist allerdings auch denkbar, ein elastisches Bandelement zu verwenden

In einer Weiterbildung oder einer alternativen Ausgestaltung des Befestigungssystems zur Befestigung einer Schwungmatte an einem Trampolinrahmen umfasst das Befestigungssystem eine Vielzahl von solchen Seilhaken und Seilschlaufen.

In einer besonders bevorzugten Ausführungsform ist die Seilschlaufe jeweils so ausgestaltet, dass sie aus einem ersten Seilabschnitt mit einem ersten Endabschnitt und einem zweiten Endabschnitt gebildet ist. Der erste Endabschnitt und der zweite Endabschnitt werden parallel nebeneinander gelegt und in einem Klemmbereich derart zusammen geklemmt, dass freie Abschnitte derjenigen Endabschnitte, welche jeweils zusammengeklemmt sind, in die gleich Richtung zeigen. Vorzugsweise wird die Klemmung über Klemmelemente wie Klammern oder Klemmhülsen erreicht. Diese Klemmelemente können beispielsweise aus Metall gefertigt sein, womit eine feste und sichere Verklemmung der Endabschnitte möglich ist. Andere Klemmelemente sind denkbar.

In einer alternativen Ausführungsform sind die Seilschlaufen jeweils so ausgestaltet, dass sie aus einem ersten Seilabschnitt und einem zweiten Seilabschnitt gebildet sind. Es werden also zwei getrennte Seilabschnitte verwendet, welche zusammengeklemmt werden.

Jeder Seilabschnitt weist jeweils einen ersten Endabschnitt und einen zweiten Endabschnitt auf. In einer Ausführungsform mit nur einem Seilabschnitt ist der erste Endabschnitt des ersten Seilabschnitts an den zweiten Endabschnitt des ersten Seilabschnittes geklemmt, womit ein Klemmbereich gebildet ist. In einer Ausfuhrungsform mit zwei Seilabschnitten sind der erste Endabschnitt des ersten Seilabschnitts an den zweiten Endabschnitt des zweiten Seilabschnittes und der zweite Endabschnitt des ersten Seilabschnitts an den ersten Endabschnitt des zweiten Seilabschnitt geklemmt, womit zwei in der Schlaufe gegenüberliegende Klemmbereiche gebildet sind.

Die Klemmbereiche können jeweils über die oben erwähnten Klemmelemente bewerkstelligt werden. Erneut werden die Endabschnitte, welche zusammengeklammert werden, derart parallel aneinander gelegt, dass freie Abschnitte derjenigen Endabschnitte, welche jeweils zusammengeklemmt sind, in die gleiche Richtung zeigen.

Der Klemmbereich ist samt Klemmelement in den ersten oder zweiten Teilraum des entsprechenden Seilhakens einhängbar.

Die vorliegende Erfindung betrifft auch die Verwendung einer solchen Seilschlaufe mit einem Seilhaken zur Befestigung einer Schwungmatte ein einem Trampolinrahmen.

Wird eine solche Seilschlaufe beispielsweise mit einem Drahthaken wie oben beschrieben verwendet, so führt dies zu einer Fixierung des Seilschlaufenendabschnittes im Aufnahmeraum. Der Drahthaken ist jedoch nicht Teil der Erfindung, wie sie in den Ansprüchen definiert ist.

Der Drahthaken weist im Bereich des Aufnahmeraumes eine relativ kleine Baubreite von im Wesentlichen dem Drahtdurchmesser oder eines vielfachen davon auf. Dadurch wird der in den Aufnahmeraum eingehängte Schlaufenendabschnitt mit dem Klemmbereich automatisch durch die schmale Bauform am Haken zentriert, da das Drahtelement in den Raum zwischen den beiden Endabschnitten gegen das Klemmelement drückt und so die Seilschlaufe gegen seitliches Verschieben fixiert.

Wird zusätzlich nun eine Zusatzhülse auf dem Drahtelement verwendet, so kann der oben beschriebene Vertikalkamm, welcher sich über mindestens den Teilraum oder den ganzen Aufnahmeraum erstreckt, genutzt werden, um die Fixierung des Klemmbereichs im Aufnahmeraum - wie oben zum Drahthaken erklärt - zu gewährleisten. Gleichzeitig wird jedoch die Baubreite durch die Zusatzhülse vom Drahtdurchmesser auf den Durchmesser der Zusatzhülse vergrössert. Damit kann gezielt erreicht werden, dass die von der Zusatzhülse zum Trampolinrahmen abgehenden Seilabschnitte räumlich weiter voneinander getrennt verlaufen. Dadurch ist ein gegenseitiges Berühren der Seilabschnitte unter Belastung vermindert, was eine bessere Schwingung und eine verbesserte Verschleissfestigkeit zur Folge hat.

Anstelle eines aus Draht geformten Seilhakens kann auch ein Haken aus Kunststoff oder einem anderen Material, beispielsweise Aluminium, verwendet werden. Nur ein einstückig ausgebildeter Kunststoffhaken ist als Teil der Erfindung im Sinne der Ansprüche anzusehen. Die Bauform des Hakens kann dann den oben im Zusammenhang mit der Zusatzhülse beschriebenen und innen an der Seilschlaufe angreifenden Vertikalkamm aufweisen, und so die Zentrierungsfunktion übernehmen. Dieser Vertikalkamm kann beispielsweise direkt in einen einschlägigen Kunststoffhaken integriert sein. Zudem kann die Verteilung und Anzahl der Befestigungselemente der für die Schwingung relevanten Zugstrecke bzw. die Gesamtlänge von elastischem Seil entlang dem Umfang des Trampolinrahmens optimiert werden.

In einer Weiterbildung kann eine Baubreite des Hakens im Bereich des Aufnahmeraumes derart gewählt werden, dass die vom Kunststoffhaken abgehenden Seilabschnitte räumlich getrennt voneinander zwischen Trampolinrahmen und Seilhaken verlaufen, womit sich diese Seilabschnitte auch unter Belastung nicht gegenseitig berühren, was eine Verschleissfestigkeit weiter erhöht.

Zusätzlich oder alternativ kann der nicht aus Draht geformte Haken ein oder mehrere Anlageelemente zur Fixierung der Seilschlaufe von aussen, wie oben beschrieben, aufweisen.

In einer Weiterbildung ist der Seilhaken mit einem Befestigungsabschnitt versehen, welcher offene Hakenelemente umfasst. Dadurch dass der Befestigungsabschnitt nicht eine geschlossene Ringform, sondern eine offenen Hakenform aufweist, kann ein bereits mit der Schwungmatte verbundenes vorzugsweise flexibles Bandelement einfach in die offenen Haken eingehängt werden. Die Befestigung des Seilhakens an der Schwungmatte und das Auswechseln des Seilhakens im Schadenfall sind dadurch besonders einfach.

In einer alternativen Ausgestaltung des Befestigungssystems umfasst das Befestigungssystem zur Befestigung einer Schwungmatte an einem Trampolinrahmen, eine Vielzahl von Seilhaken, wobei das Befestigungssystem insbesondere wie oben beschrieben ausgebildet ist, wobei die Seilschlaufe aus einem ersten Seilabschnitt gebildet ist, wobei jeder Seilabschnitt jeweils einen ersten Endabschnitt und einen zweiten Endabschnitt aufweist, und wobei die ersten und zweiten Endabschnitte jeweils zu einer ersten und einer zweiten geschlossenen Bucht umgebogen und jeweils mit mindestens einem Klemmelement festgeklemmt sind, wobei die erste und zweite Bucht Augen bilden, die in den ersten und zweiten Teilraum des entsprechenden Seilhakens einhängbar sind.

In dieser alternativen Ausführungsform der Seilschlaufe wird ebenfalls ein erster Seilabschnitt bereitgestellt, welcher einen ersten und einen zweiten Endabschnitt aufweist. Jeder Endabschnitt wird derart zu einer kleinen Schlaufe oder eine Bucht eingeschlagen und durch eine abermalige Verklemmung, beispielsweise durch die oben genannte Klammermethode, der distale freie Abschnitt des jeweiligen Endabschnittes an den Proximalbereich desselben Endabschnittes geklemmt ist. Dadurch ist an jedem Ende des Seilabschnitts eine kleine Schlaufe, d.h. ein Auge, bereitgestellt, welche dann in den Aufnahmeabschnitt des Seilhakens einhängbar ist. Hier ist es allerdings so, dass der Klemmbereich bei gespannter Schlaufe nicht mehr im Aufnahmeraum des Seilhakens, sondern in Richtung des Seilabschnittes hinter dem Seilhaken angeordnet ist.

Die Zugstrecken der zwischen Rahmen und Haken verlaufenden Seilstränge sind bei allen Seilschlaufen jeweils gleich, so dass eine vorzeitige Abnützung eines Seilstrangs verhindert werden kann.

Die vorliegende Erfindung betrifft auch ein Trampolin mit einer Schwungmatte und einem Trampolinrahmen, wobei das Trampolin weiter ein Befestigungssystem wie oben beschrieben umfasst, mit welchem die Schwungmatte im Trampolinrahmen eingehängt ist.

In einer Weiterbildung umfasst das Trampolin ein Befestigungssystem wie oben beschrieben, wobei die Seilschlaufen jeweils derart eingespannt sind, dass der Klemmbereich jeweils im ersten oder im zweiten Teilraum des entsprechenden Seilhakens liegt.

In einer anderen Weiterbildung umfasst das Trampolin ein Befestigungssystem wie oben beschrieben, wobei die ersten und zweiten Seilschlaufenendabschnitte in den ersten und zweiten Teilraum der entsprechenden Seilhaken eingehängt sind.

Die vorliegende Erfindung betrifft auch die Verwendung eines Seilhakens wie oben beschrieben oder eines Befestigungssystems wie oben beschrieben zur Verbindung einer Schwungmatte mit einem Trampolinrahmen.

Im Weiteren ist es eine Aufgabe der vorliegenden Erfindung ein Verfahren anzugeben, welches die Befestigung einer Schwungmatte an einem Trampolinrahmen verbessert.

Diese Aufgabe wird durch das Verfahren nach Anspruch 11 gelöst. Demgemäss wird ein Verfahren zur Befestigung einer Schwungmatte an einem Trampolinrahmen mit folgenden Verfahrensschritten vorgeschlagen:
i) Bereitstellen eines Befestigungssystems wie oben beschrieben;
ii) Umschlingen eines Abschnitts des Trampolinrahmens mit der Seilschlaufe und Einhängen des ersten und des zweiten Schlaufenendabschnitts in den Aufnahmeraum des Seilhakens zur Spannung der Schwungmatte im Trampolinrahmen,
wobei die Seilhaken vorzugsweise mittels jeweils mindestens eines flexiblen Bandelements an der Schwungmatte befestigt werden.

Eine Ausführungsform eines Verfahrens zur Befestigung einer Schwungmatte in einem Trampolinrahmen mittels eines Befestigungssystems mit einer Vielzahl von Seilhaken und elastischen Seilschlaufen, wobei das Verfahren insbesondere das oben beschriebene Verfahren ist, ist dadurch gekennzeichnet, dass die Seilschlaufe aus einem ersten Seilabschnitt, oder aus einem ersten Seilabschnitt und einem zweiten Seilabschnitt gebildet ist, wobei jeder Seilabschnitt jeweils einen ersten Endabschnitt und einen zweiten Endabschnitt aufweist, wobei der erste Endabschnitt des ersten Seilabschnitts an den zweiten Endabschnitt des ersten oder gegebenenfalls des zweiten Seilabschnittes in einem Klemmbereich geklemmt ist, und der zweite Endabschnitt des ersten Seilabschnitts an den ersten Endabschnitt des ersten bzw. des zweiten Seilabschnittes in einem Klemmbereich geklemmt ist, sodass die freien Abschnitte derjenigen Endabschnitte, welche jeweils zusammengeklemmt sind, in die gleich Richtung zeigen, wobei der Klemmbereich in den ersten oder zweiten Teilraum des entsprechenden Seilhakens eingehängt wird.

Vorzugsweise ist der Seilhaken mit mindestens einem oder mehreren Anlageelementen, wie oben beschrieben, versehen, um die feien Abschnitte der Seilschlaufen im Aufnahmeraum zu fixieren.

Alternativerweise kann bei diesem Verfahren auch ein Befestigungssystems verwendet werden, welches eine Vielzahl von Seilhaken und elastischen Seilschlaufen umfasst, wobei das Befestigungssystem insbesondere eines der oben beschriebenen Befestigungssysteme ist. Hierbei weist jeder Seilabschnitt jeweils einen ersten Endabschnitt und einen zweiten Endabschnitt auf, wobei die ersten und zweiten Endabschnitte jeweils zu einer ersten und einer ersten und einer zweiten Schlaufe umgebogen und jeweils mit mindestens einem Klemmelement festgeklemmt sind, wobei die erste und zweite Schlaufe in den ersten oder zweiten Teilraum des entsprechenden Seilhakens eingehängt sind.

Nach einem weiteren Aspekt der vorliegenden Erfindung, welcher unabhängig jedoch vorteilhafterweise mit den oben beschriebenen Aspekten verwendet werden kann, sind die Seilhaken derart ausgestaltet, dass sich das mindestens eine Bandelement händisch einhängen lässt. Dies kann beispielsweise dadurch erreicht werden, dass der Befestigungsabschnitt des entsprechenden Seilhakens mindestens ein nach aussen oder innen offenes Hakenelement aufweist. Es ist natürlich auch denkbar, dass der entsprechende Befestigungsabschnitt zwei Hakenelemente, welche jeweils nach aussen oder nach innen offen sind, aufweist. Zudem ist es denkbar, dass anstelle der Hakenelemente ein Bolzenelement verwendet wird, welches in den Seilhaken lösbar eingehängt werden kann. Das Bandelement wird dann um das Bolzenelement herumgeschleift bevor das Bolzenelement in den Seilhaken eingebracht wird. Durch diese Einhängbarkeit sowohl der Schlaufe als auch des mindestens einen Bandelementes kann ein einzelner defekter Seilhaken nach dem Komplettzusammenbau des Trampolins einfach ausgewechselt werden. Zudem ist das Einhängen nach Befestigung der Bandelemente vorteilhaft in der Produktion, da das Zwischenprodukt aus Schwungmatte und daran befestigten Bandelementen ohne angehängte Seilhaken einfacher im Umgang, beispielsweise leichter stapelbar ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figuren 1a-d: Ansichten einer ersten Ausführungsform eines Seilhakens (lediglich als Beispiel gezeigt und nicht durch die Ansprüche abgedeckt);
- Figuren 2-5: Ansichten des Seilhakens nach Fig. 1 mit einer ersten Ausführungsform einer Seilschlaufe und einer ersten Ausführungsform eines Bandelements;
- Figuren 6a-d: Ansichten einer Ausführungsform einer Zusatzhülse für den Seilhaken nach Fig. 1;
- Figuren 7-10: Ansichten des Seilhakens nach Fig. 1 mit der Zusatzhülse nach Fig. 6, einer zweiten Ausführungsform der Seilschlaufe und der ersten Ausführungsform des Bandelements nach Figuren 2-5;
- Fig. 11: eine Ansicht eines Trampolins;
- Figuren 12-15: Ansichten einer zweiten Ausführungsform eines Seilhakens (lediglich als Beispiel gezeigt und nicht durch die Ansprüche abgedeckt), mit der zweiten Ausführungsform der Seilschlaufe nach Figuren 7-10 und mit einer zweiten Ausführungsform eines zweiteiligen Bandelements;
- Figuren 16-19: Ansichten einer dritten Ausführungsform eines Seilhakens (lediglich als Beispiel gezeigt und nicht durch die Ansprüche abgedeckt), mit der zweiten Ausführungsform der Seilschlaufe nach Figuren 7-10;
- Fig. 20a-c: Ansichten einer vierten Ausführungsform des erfindungsgemässen Seilhakens;
- Figuren 21-24: Ansichten einer vierten Ausführungsform des erfindungsgemässen Seilhakens mit der zweiten Ausführungsform der Seilschlaufe nach Figuren 7-10 und mit der zweiten Ausführungsform des zweiteiligen Bandelements nach Figuren 12-15;
- Figuren 25-28: Ansichten einer fünften Ausführungsform des erfindungsgemässen Seilhakens mit der zweiten Ausführungsform der Seilschlaufe nach Figuren 7-10 und dem Bandelement nach Figuren 2-5;
- Fig. 29: eine Ansicht einer sechsten Ausführungsform des erfindungsgemässen Seilhakens;
- Fig. 30: eine Ansicht der sechsten Ausführungsform des erfindungsgemässen Seilhakens nach Fig. 29 mit der zweiten Ausführungsform der Seilschlaufe nach Figuren 7-10;
- Fig. 31: eine Ansicht einer siebten Ausführungsform des erfindungsgemässen Seilhakens;
- Fig. 32: eine Ansicht der siebten Ausführungsform des erfindungsgemässen Seilhakens nach Fig. 31 einer dritten Ausführungsform der Seilschlaufe
- Fig. 33: eine Ansicht einer achten Ausführungsform des erfindungsgemässen Seilhakens;
- Fig. 34 bis 35: weitere Ansichten des Gegenstandes nach Figur 33;
- Fig. 36: eine Längsschnittansicht des Gegenstandes nach Figur 33; und
- Fig. 37: eine Detailansicht des Gegenstandes nach Figur 33.

### BESCHREIBUNG BEVORZUGTER AUSFÜHRUNGSFORMEN

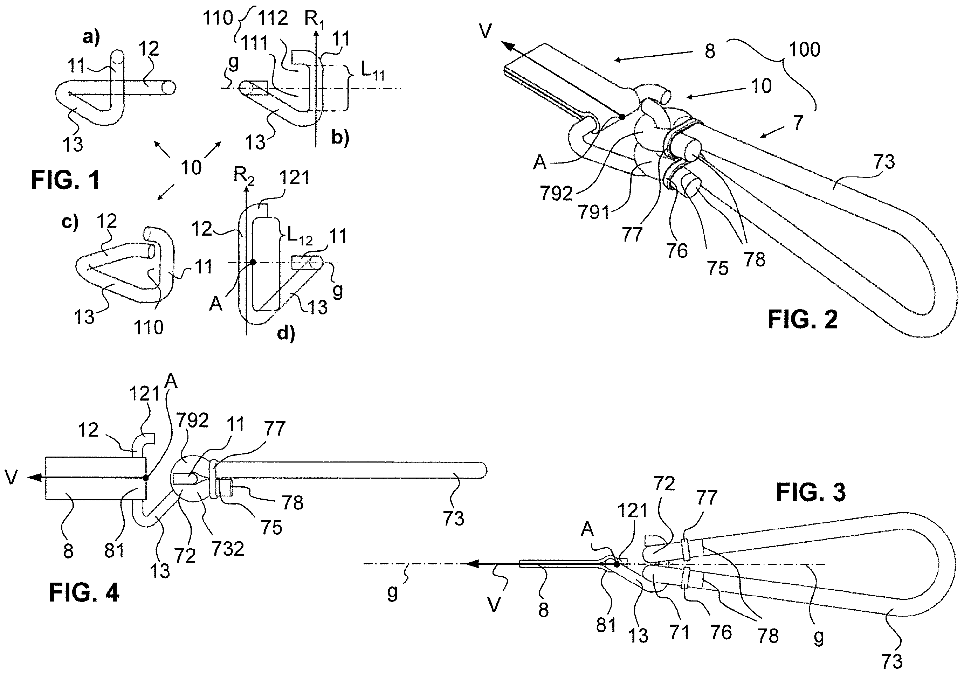

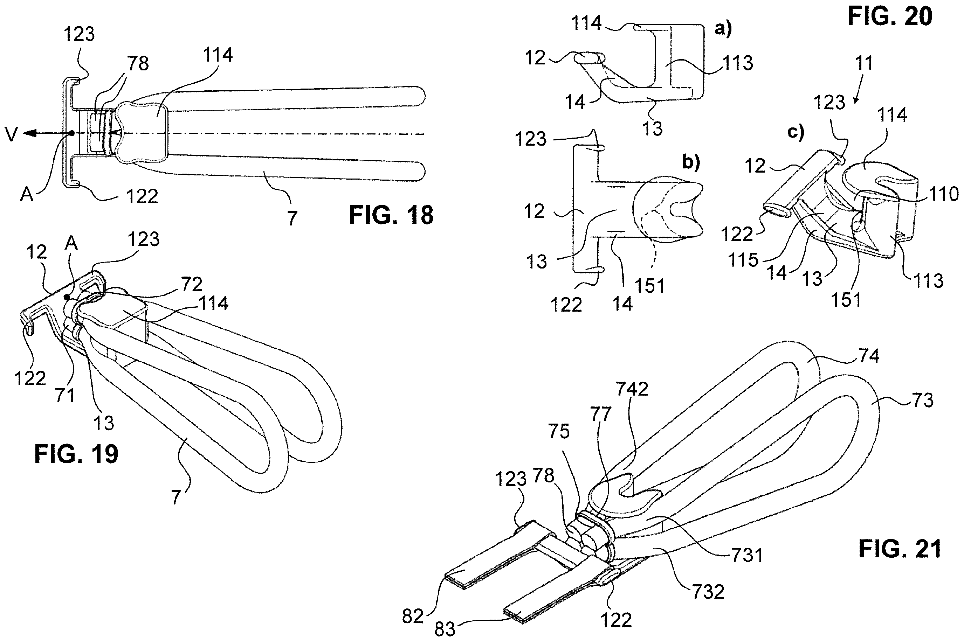

Anhand der Figuren 20-32 werden nun bevorzugte Ausführungsformen der vorliegenden Erfindung beschrieben. Die Figuren 1-19 zeigen mögliche Ausführungsformen die nicht durch den Ansprüchen abgedeckt sind.

**Figur 1** ist in vier Teilfiguren a) bis d) unterteilt und zeigt eine erste Ausführungsform des Seilhakens 10. Der Seilhaken 10 ist einstückig aus einem Drahtstück geformt. Der Seilhaken 10 umfasst einen Aufnahmeabschnitt 11, einen quer und bestandet dazu angeordneten Befestigungsabschnitt 12, und einen Übergangsabschnitt 13, welcher den Aufnahmeabschnitt 11 und den Befestigungsabschnitt 12 miteinander verbindet.

In Teilfigur 1a) ist der Seilhaken 10 in einer Vordersicht gezeigt. Man schaut also aus distaler Richtung auf den Aufnahmeabschnitt 11 und den sich dahinter befindlichen Befestigungsabschnitt 12. In Teilfigur 1b) schaut man in einer zweiten Richtung R₂ des Befestigungsabschnittes 12. In Teilfigur 1c) schaut man perspektivisch von oben auf den Seilhaken 10 und in Teilfigur 1d) schaut man von oben entgegen einer ersten Richtung R₁ (s. Teilfigur 1b)) auf den Seilhaken 10.

Wie in den Figuren 1a)-d) dargestellt, besteht Seilhaken 10 aus einem im Wesentlichen über seine Längserstreckung L₁₁ in der ersten Richtung R₁ gerade verlaufenden Aufnahmeabschnitt 11, welcher an seinem freien Ende um 90° gegen den Befestigungsabschnitt 12 gerichtet umgebogen ist und an seinem anderen Ende mit einem distalen Ende des Übergangsabschnitt 13 verbunden ist. Der Aufnahmeabschnitt 11 stellt einen gegen den Befestigungsabschnitt 12 gerichteten Aufnahmeraum 110 bereit. Die endseitige freie Kurve des Aufnahmeabschnittes 11 begrenzt den Aufnahmeraum 110 nach oben und dient dazu, Schlaufenendabschnitte 71, 72, welche in den Aufnahmeabschnitt 11 eingehängt sind (s. unten und Figuren 2-5), im Aufnahmeraum 110 bezüglich der ersten Richtung R₁ zu fixieren. Der Aufnahmeabschnitt 11 ist weiter derart dimensioniert, dass mindestens zwei Schlaufenendabschnitte einer Seilschlaufe 7 (s. Fig. 2) in den Aufnahmeraum 110 eingebracht werden können. Eine typische Länge der Längserstreckung L₁₁ des Aufnahmeabschnittes 11 beträgt bspw. im Wesentlichen das Doppelte eines Durchmessers des für die Schlaufe 7 verwendeten ersten Seilabschnittes 73 (s. unten).

Der Befestigungsabschnitt 12 weist ebenfalls ein freies Ende auf, welches um 90° gegen den Aufnahmeabschnitt 11 gerichtet umgebogen ist. Die beiden umgebogenen freien Enden sind also in entgegengesetzte Richtungen orientiert. Mit dem anderen Ende geht der Befestigungsabschnitt 12 in ein proximales Ende des Übergangsabschnitts 13 über. Zwischen den beiden Enden verläuft der Befestigungsabschnitt 12 im Wesentlichen gerade über seine Längserstreckung L₁₂ entlang der zweiten Richtung R₂. Der Befestigungsabschnitt 12 ist hierbei derart ausgebildet, dass der Befestigungsabschnitt 12 in ein Bandelement 8 einhängbar ist (s. Figuren 2-5). Eine typische Länge der Längserstreckung L₁₂ des Befestigungsabschnittes 12 ist gleich lang oder bis zu 50% länger als der Aufnahmeabschnitt 11.

Der Übergangsabschnitt 13 verläuft im Wesentlichen gerade zwischen dem Aufnahmeabschnitt 11 und dem Befestigungsabschnitt 12 und ist typischerweise etwas länger als der Aufnahmeabschnitt 11 und etwas kürzer als der Befestigungsabschnitt 12.

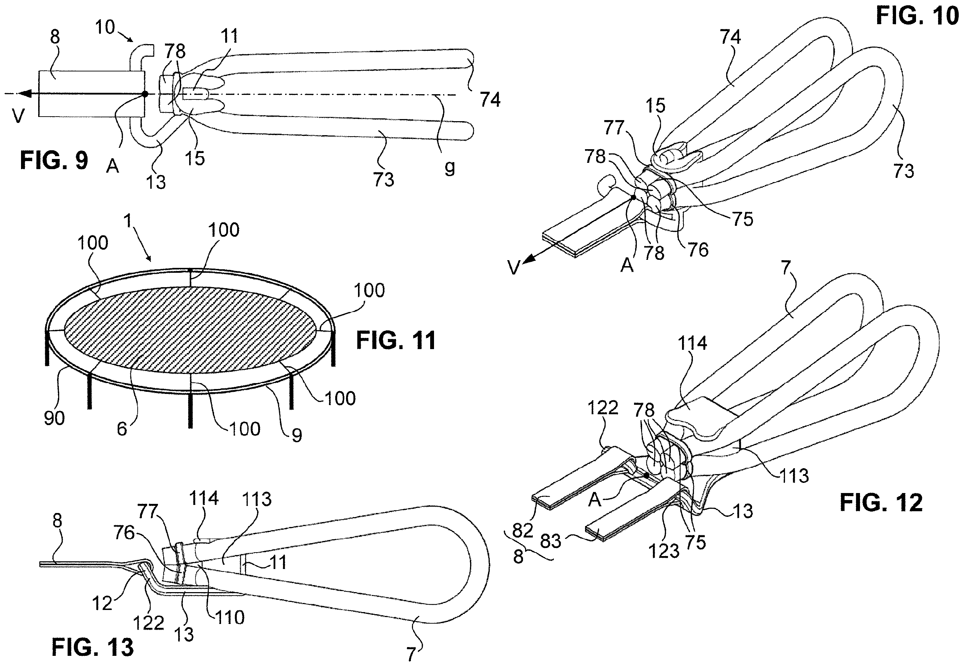

Vorteilhafterweise sind die Dimensionen des Seilhakens 10 so gewählt, dass der Befestigungsabschnitt 12 in ein Bandelement 8 und zwei Schlaufenendabschnitte 71, 72 in den Aufnahmeabschnitt 11 eingehängt werden können. Ein Material und eine Materialstärke sind so zu wählen, dass die erforderliche Stabilität des Seilhakens 10 bei der für das Minitrampolin 1 (s. Fig. 11) typischen Bespannung sowie der Belastung bei einer bestimmungsgemässen Benutzung gewährleistet ist.

Legt man nun eine Gerade g, wie in Figur 1b) gezeigt, durch einen Mittelpunkt des Befestigungsabschnittes 12 und durch einen Mittelpunkt des Aufnahmeabschnitts 11, so teilt diese Gerade g den Aufnahmeraum 110 in einen ersten Teilraum 111 und einen zweiten Teilraum 112. Die Gerade g steht senkrecht auf der ersten Richtung R₁ und der zweiten Richtung R₂.

Der Seilhaken 10 ist weiter ausgebildet, dass der erste Teilraum 111 zur Aufnahme des ersten Schlaufenendabschnitt 71 und der zweite Teilraum 112 zur Aufnahme des zweiten Schlaufenendabschnitt 72 nutzbar ist. Dies ist in den Figuren 2-5 gezeigt.

Der Schnittpunkt zwischen der Geraden g und der gegen den Aufnahmeabschnitt 11 gerichteten Oberfläche des Befestigungsabschnittes 12 definiert einen Ansatzpunkt A. Von diesem Ansatzpunkt A aus verläuft ein Hauptzugvektor V entlang der Geraden g. Der Hauptzugvektor V stellt im Wesentlichen die resultierende Kraft dar, welche ein Bandelement 8 auf den Haken 10 in Spannlage vor der Benutzung des Trampolins 1 ausübt. Der Hauptzugvektor V steht also im Wesentlichen senkrecht zur ersten Richtung R₁ und zur zweiten Richtung R₂ und findet im Ansatzpunkt A seinen Ursprungspunkt.

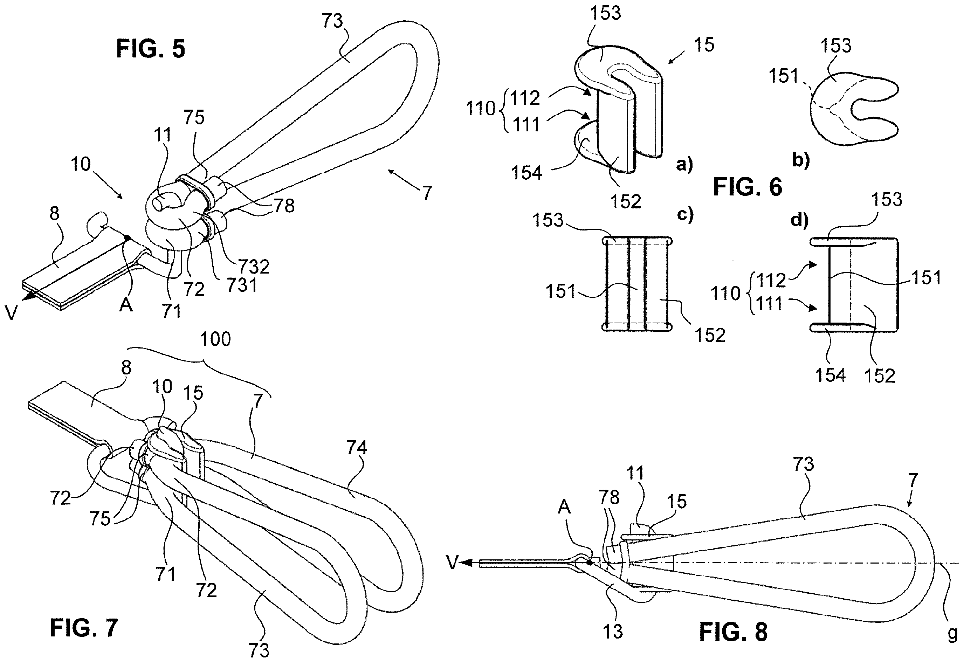

**Figur 2** zeigt in einer perspektivischen Ansicht von vorne den Seilhaken 10 nach Fig. 1 mit der eingehängt Seilschlaufe 7 und dem eingehängten Bandelement 8. **Figur 3** zeigt eine Seitenansicht des Gegenstandes der Fig. 2. **Figur 4** zeigt eine Ansicht von oben des Gegenstandes der Fig. 2. **Figur 5** zeigt den Gegenstand der Fig. 2 von hinten, d.h. aus der Richtung des Bandelementes 8.

Der Seilhaken 10 mit der Seilschlaufe 7 und dem Bandelement 8 stellt ein Befestigungssystem 100 dar, wie es in den Figuren 2-5 gezeigt ist. Die Figuren 2-5 zeigen das Befestigungssystem 100 jeweils in Spannlage.

In den Figuren 2-32 werden drei Ausführungsformen der geschlossenen Seilschlaufe 7, gefertigt aus elastischem Gummiseil, dargestellt. Anhand der ersten Ausführungsform des Seilhakens 10 gemäss den Figuren 2-5 wird nun eine erste Ausführungsform der Seilschlaufe 7 beschrieben.

Die Seilschlaufe 7 nach der ersten Ausführungsform gemäss den Figuren 2-5 weist einen ersten elastischen Seilabschnitt 73 auf. Dieser erste Seilabschnitt 73 hat einen ersten Endabschnitt 731 und einen zweiten Endabschnitt 732. Die beiden Endabschnitte 731, 732 sind jeweils zu einer geschlossenen Bucht umgeschlagen. Mittels eines ersten Klemmelements 76 ist die erste Bucht zu einer festen ersten Schlaufe 791 geformt. Mittels eines zweiten Klemmelements 77 ist die zweite Bucht zu einer festen zweiten Schlaufe 792 geformt. Die beiden Klemmelemente 76, 77 sind hier Metallklammern, welche die entsprechenden Seilabschnitte in einem Klemmbereich 75 fest zusammenklemmen. Die erste und zweite Schlaufen 791, 792 sind so geformt, dass die freien Abschnitte 78 in Richtung des ersten Seilabschnitts 73 zeigen.

In den Figuren 2-5 sind die erste und zweite Schlaufen 791, 792 in den ersten bzw. den zweiten Teilraum 111, 112 eingeführt und so im Aufnahmeabschnitt 11 eingehängt. Der zwischen den Schlaufen 791, 792 sich erstreckende Seilabschnitt ist um einen Rahmenabschnitt 90 eines Trampolinrahmens 9 des Trampolins 1 gemäss Figur 11 geführt.

Der Befestigungsabschnitt 12 ist in ein ebenfalls schlaufenartig ausgebildetes Bandelement 8 eingehängt. Dieses Bandelement 8 ist flexibel und mit der Schwungmatte 6 (s. Fig. 11) verbunden, beispielsweise mit der Matte 6 vernäht. Am distalen Ende 81 weist das Bandelement 8 eine Öffnung auf, in welche der Befestigungsabschnitt 12 einführbar ist.

Vorteilhafterweise ist das Bandelement 8 deutlich weniger elastisch als die Seilschlaufe 7 oder unelastisch ausgebildet. In der Spannlage übt das Bandelement 8 eine Kraft auf den Seilhaken 10 aus, sodass der Haken 10 die aufgenommenen Schlaufenendabschnitt 71, 72 gegen den Zug des ersten Seilabschnitts 73 zurückhält. Die durch das Bandelement 8 ausgeübte Kraft kann durch den Hauptzugvektor V, welcher im Ansatzpunkt A des Seilhakens 10 angreift und in Richtung der Sprungmatte 6 zeigt, dargestellt werden.

In **Figur 6** ist eine Zusatzhülse 15 für die Weiterbildung des Befestigungssystems 100 gemäss den Figuren 2-5 in vier Teilfiguren 6a)-6d) dargestellt.

Diese Zusatzhülse 15 weist einen U-förmigen, sich entlang einer Längsachse erstreckenden Grundkörper 152 auf. An Stirnseiten bezüglich der Längsachse des Grundkörpers 152 sind den Grundkörper 152 zur Bodenseite der U-Form hin überragende Endplatten 153, 154 vorgesehen. Die Zusatzhülse 15 ist hierbei so ausgestaltet, dass die U-Form des Grundkörpers 152 über den Aufnahmeabschnitt 11 des Drahthakens 10 nach Fig. 1 schiebbar ist. Vorzugsweise sind die Seitenwände der U-Form leicht elastisch und die U-Form derart ausgestaltet, dass ein Aufklicken der U-Form auf den Aufnahmeabschnitt 11 mit einer Selbstverrastung möglich ist. Dies kann insbesondere dadurch erreicht werden, dass der Aufnahmeraum der U-Form sich gegen deren Tiefe zuerst verschmälert und dann wieder verbreitert, wie dies beispielsweise in Figur 6b) ersichtlich ist. Diese mittigen Nocken hintergreifen in Sperrlage dann den Aufnahmeabschnitt 11.

Die U-Form weist eine Bodenseite und zwei davon abragende Schenkel auf. Auf der Bodenseite gegenüber des Aufnahmeraums der U-Form ist ein Vertikalkamm 151 aufgefonnt, welcher sich zwischen den beiden Endplatten 153, 154 erstreckt. Dieser Vertikalkamm ragt um 1 Millimeter bis 3 Millimeter von der äusseren Bodenseite der U-Form ab. Eine Länge der Zusatzhülse 15 ist so gewählt, dass im Wesentlichen der gesamte sich über die Längserstreckung L₁₂ gerade erstreckende Abschnitt des Aufnahmeabschnitts 11 im Aufnahmeraum der U-Form aufgenommen wird.

In den **Figuren 7-10** ist eine alternative Ausführungsform des Befestigungssystems 100 dargestellt. Zum einen ist der Drahthaken 10 gemäss Fig. 1 gezeigt, welcher mit der Zusatzhülse 15 gemäss Fig. 6 weitergebildet ist. Weiter ist eine zweite Ausführungsform der Schlaufe 7 dargestellt.

Die Schlaufe 7 gemäss der zweiten Ausführungsform weist einen ersten Aufnahmeabschnitt 73 und zusätzlich ein zweiten Seilabschnitt 74 auf. Die Schlaufe 7 ist also aus zwei Seilabschnitten geformt. Der erste Seilabschnitt 73 weist erneut den ersten und zweiten Endabschnitt 731, 732 auf. Der zweite Seilabschnitt 74 weist ebenfalls einen ersten Endabschnitt 741 und einen zweiten Endabschnitt 742 auf.

Die Schlaufe 7 gemäss der zweiten Ausführungsform wir nun so hergestellt, dass der erste Seilabschnitt 73 und der zweite Seilabschnitt 74 parallel nebeneinander gelegt werden, sodass sich zum einen der erste Endabschnitt 731 des erste Seilabschnitts 73 und der zweite Endabschnitt 742 des zweiten Seilabschnitts 74 berühren und zum anderen auch der zweite Endabschnitt 732 des erste Seilabschnitts 73 und der erste Endabschnitt 741 des zweiten Seilabschnitts 74 berühren. Die sich berührenden Endabschnitte 731, 742 und 732, 741 werden dann über ein erstes Klemmelement 76 bzw. ein zweites Klemmelement 77 aneinander festgeklemmt, womit jeweils Klemmbereiche 75 gebildet sind.

Das Klemmelement 76, 77 kann erneut eine quetschbare Metallklammer oder Metallhülse sein, welche die entsprechenden Endabschnitte 731, 742 und 732, 741 fest miteinander verbindet. Die beiden Klemmbereiche 75 bilden hierbei den ersten Schlaufenendabschnitt 71 und den zweiten Schlaufenendabschnitt 72.

Wie in den Figuren 7-10 gezeigt, kann nun der erste Schlaufenendabschnitt 71 in den ersten Teilraum 111 des nun von der Zusatzhülse 15 bereitgestellten Aufnahmeraums 110 eingehängt werden. Sodann kann die Schlaufe 7 um den Rohrrahmenabschnitt 90 geführt und zurück gegen den Haken 10 gezogen werden, wobei der zweite Schlaufenendabschnitt 72 in den zweiten, sich unmittelbar in der ersten Richtung R₁ und ohne Unterbrechung an den ersten Teilraum 111 anschliessenden zweiten Teilraum 112 eingehängt werden. Es ist zu erkennen, dass die freien Abschnitte 78 sämtlicher Endabschnitte 731, 732, 741, 742 in die gleiche Richtung zeigen, nämlich gegen den Befestigungsabschnitt 12 bzw. die Schwungmatte 6 gerichtet sind.

Wie in den Figuren 7-10 dargestellt ist, greift der Kamm 151 in den Raum zwischen den sich berührenden Endabschnitten 731, 742 und 732, 741 gegen die Klemmbereiche 75, wobei dieser Raum in Spannlage in proximaler Richtung durch die Klemmelemente 76, 77 begrenzt ist. Dies hat zur Folge, dass die Seilschlaufe 7 mit ihren Seilschlaufenenden 71, 72 an der Zusatzhülse 15 gegen benutzungsbedingtes seitliches Verrutschen fixiert ist.

Durch das Einsetzen der Zusatzhülse 15 gemäss der Weiterbildung des Befestigungssystems 100 wird zusätzlich zur seitlichen Fixierung der Schlaufenendabschnitt 71, 72 erreicht, dass die Schlaufenendabschnitte 71, 72 über die U-Form des Grundkörpers 152 der Zusatzhülse 15 aufgespreizt werden, so dass die vier von der Zusatzhülse 15 abgehenden Seilabschnitte, welche zwischen dem Seilhaken 10 und dem Rohrrahmen 9 verlaufen, räumlich weiter voneinander getrennt sind. Dies hat den Vorteil, dass bei der bestimmungsgemässen Benutzung des Trampolins 1 eine Berührung zwischen diesen vier Seilabschnitten verhindert ist, was die Verschleissfestigkeit des Befestigungssystems 100 weiter verbessert und zudem die Bildung von störenden Geräuschen mindert.

Die Zusatzhülse 15 hat also eine Doppelfunktion: Zum einen soll die Seilschlaufe 7 fixiert werden, zum anderen eine gegenseitige Berührung von Seilschlaufenendabschnitten mit Ausnahmen der Klemmbereiche 75 bei der bestimmungsgemässen Benutzung vermieden werden.

Die **Figur 11** zeigt in perspektivischer Ansicht eine Ausführungsform des Trampolins 1. Das Trampolin 1 umfasst den geschlossenen Trampolinrahmen 9, an welchem eine Vielzahl von Beinen angebracht ist. In den Rahmen 9 ist die Schwungmatte 6 eingehängt, wobei das Befestigungssystem 100 verwendet wurde. Das Befestigungssystem 100 besteht aus einer Vielzahl von Seilhaken 10 mit Schlaufen 7 und mit Bandelementen 8 wie hierin beschrieben, wobei die jeweiligen Schlaufen 7 um entsprechende Rahmenabschnitte 90 geführt sind.

In den **Figuren 12-15** ist eine zweite Ausführungsform eines Seilhakens 10 (lediglich als Beispiel gezeigt und nicht durch die Ansprüche abgedeckt) mit der oben beschriebenen zweiten Ausführungsform der Seilschlaufe 7 gezeigt. Der Seilhaken 10 ist hier nicht mehr als Drahthaken ausgebildet, sondern als Formteil konzipiert. Vorzugsweise ist der Seilhaken 10 aus Kunststoff geformt; es können jedoch auch andere Materialien wie beispielsweise Metall oder Legierungen zum Einsatz kommen. Der Haken 10 kann geformt, gegossen, gespritzt oder mit einer anderen Technologie hergestellt werden.

Der Seilhaken 10 weist einen trommelartigen Grundkörper 113 auf, welcher an seinem freien Ende mit einer plattenartigen und den Grundkörper 113 überragenden Überdeckung 114 abgeschlossen ist. Die Überdeckung 114 ragt mit ihrem freien Ende gegen den Befestigungsabschnitt 12 und stellt so sicher, dass die aufgenommenen Schlaufenendabschnitt 71, 72 rutschsicher bezüglich der ersten Richtung R₁ im Aufnahmeraum 110 eingehängt sind. Der trommelförmige Aufnahmeabschnitt 113 stellt den Aufnahmeraum 110 bereit und weist im Wesentlichen die Form und Funktion des oben beschriebenen Grundkörpers 152 der Zusatzhülse 15 auf. Am der Überdeckung 114 gegenüberliegenden Ende des trommelförmigen Aufnahmeabschnitts 113 ist erneut der Übergangsabschnitt 13 angeformt. Dieser Übergangsabschnitt 13 ist ebenfalls plattenartig ausgeformt und begrenzt den Aufnahmeraum 110 entgegen der ersten Richtung R₁. Am proximalen Ende des Übergangsabschnitts 13 ist der Befestigungsabschnitt 12 angeformt.

Der Befestigungsabschnitt 12 ist durch zwei gegeneinander gerichtete Hakenelemente 122, 123 gebildet. Die beiden Hakenelemente 122, 123 weisen Aufnahmeabschnitte auf, welche beide fluchtend entlang der zweiten Richtung R₂ verlaufen. Das Bandelement 8 ist 2-teilig durch zwei schmalere Bandelemente 82, 83 ausgebildet. Das erste Teilbandelement 82 ist in das erste Hakenelement 122, das zweite Teilbandelement 83 in das zweite Hakenelement 123 eingehängt. Der oben erwähnte Ansatzpunkt A befindet sich hier nun mittig zwischen den beiden Aufnahmeabschnitten des ersten und zweiten Hakenelements 122, 123. Wie aus den Figuren erkennbar ist, sind der Übergangsabschnitt 13 und Befestigungsabschnitt 12 so ausgeformt, dass der Ansatzpunkt A auf die Höhe der Mitte des Grundkörpers 113 gehoben ist. Dies kann allgemein von Vorteil sein.

In die beiden Hakenelemente 122, 123 ist jeweils ein schmales Teilbandelement 82, 83 eingehängt. Die beiden Teilbandelemente 82, 83 üben in Spannlage eine resultierende Kraft auf den Seilhaken 10 aus, welche erneut durch den Hauptzugvektor V, welcher im Ansatzpunkt A angreift, dargestellt werden kann.

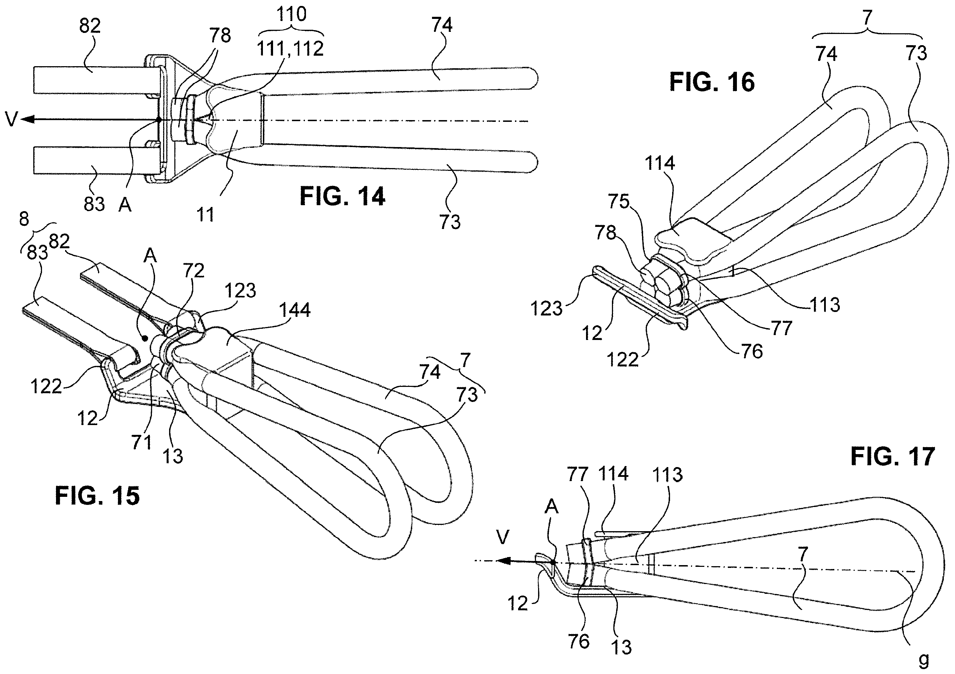

In den **Figuren 16-19** ist eine dritte Ausführungsform eines Seilhakens 10 (lediglich als Beispiel gezeigt und nicht durch die Ansprüche abgedeckt) mit der oben beschriebenen zweiten Ausführungsform der Seilschlaufe 7 dargestellt. Im Unterschied zur zweiten Ausführungsform ist der Befestigungsabschnitt 12 nun derart ausgeformt, dass die ersten und zweiten Hakenelemente 122, 123, welche entlang der zweiten Richtung R₂ verlaufen, sich nicht gegeneinander, sondern nach aussen öffnen.

In **Figur 20** ist eine vierte Ausführungsform des Seilhakens 10 in drei Teilfiguren 20a)-c) gezeigt. **Figuren 21-24** zeigen dann den Seilhaken nach Fig. 20 mit der oben beschriebenen zweiten Ausführungsform der Seilschlaufe 7 und mit einem zweiteiligen Bandelement 8, wie oben beschreiben.

Diese vierte Ausführungsform ist als einstückiges Formteil konzipiert, wobei die Form im Wesentlichen von der Zusatzhülse 15, wie oben beschrieben, ausgeht. Anstelle des unten in Fig. 6 gezeigten Plattenelementes 154 ist in der vierten Ausführungsform des Seilhakens 10 der Übergangsabschnitt 13 angeformt, welcher sich in proximaler Richtung bis zum Befestigungselement 12 erstreckt. Der Befestigungsabschnitt 12 ist derart ausgeformt, dass erneut zwei Hakenelemente 122, 123 gebildet sind, welche sich, ähnlich wie in der zweiten Ausführungsform des Seilhaken 10, nach aussen öffnen.

Der Befestigungsabschnitt 12 ist ein im Wesentlichen entlang der zweiten Richtung R₂ verlaufendes Stabelement mit elliptischem oder runden Querschnitt, wobei an seitlichen Enden des Befestigungsabschnittes 12 entlang der zweiten Richtung R₂ Überdeckungselemente, also Sicherungsvorsprünge, vorgesehen sind, welche Überdeckungselemente das Stabelement in die distaler Richtung gegen den Aufnahmeraum 110 ragend ausgebildet sind und das aufgenommene Bandelement 8 sichern.

Wie insbesondere in Figur 20 erkennbar ist, ist erneut ein Vertikalkamm 151 vorgesehen, welcher eine seitliche Fixierung der Schlaufe 7 durch Eingriff in die Klemmbereiche 75 wie oben beschrieben sicherstellt. Zudem ist erkennbar, dass in die erste Richtung R₁ abragende wandartige Anlageelemente 14 an den seitlichen Rändern des Übergangsabschnitts 13 vorgesehen sind. Diese Anlageelemente 14 sind so ausgestaltet, dass dazwischen ein Aufnahmeteilraum 115 zur Aufnahme der freien Abschnitte 78 mindestens des ersten Schlaufenendabschnitts 71 gebildet ist. Diese Anlageelemente 14 übernehmen also im Wesentlichen eine ähnliche Funktion wie der Vertikalkamm 151; sie führen nämlich zu einer seitlichen Fixierung zumindest des ersten Schlaufenendabschnitts 71 in Spannlage. Im Gegensatz zum Vertikalkamm 151 wirken die Anlageelemente 14 aber nicht von innen, sondern von aussen auf die freien Abschnitte 78 der Schlaufe 7 und stellen diese im Aufnahmeteilraum 115 gegen ein seitliches Verrutschen fest.

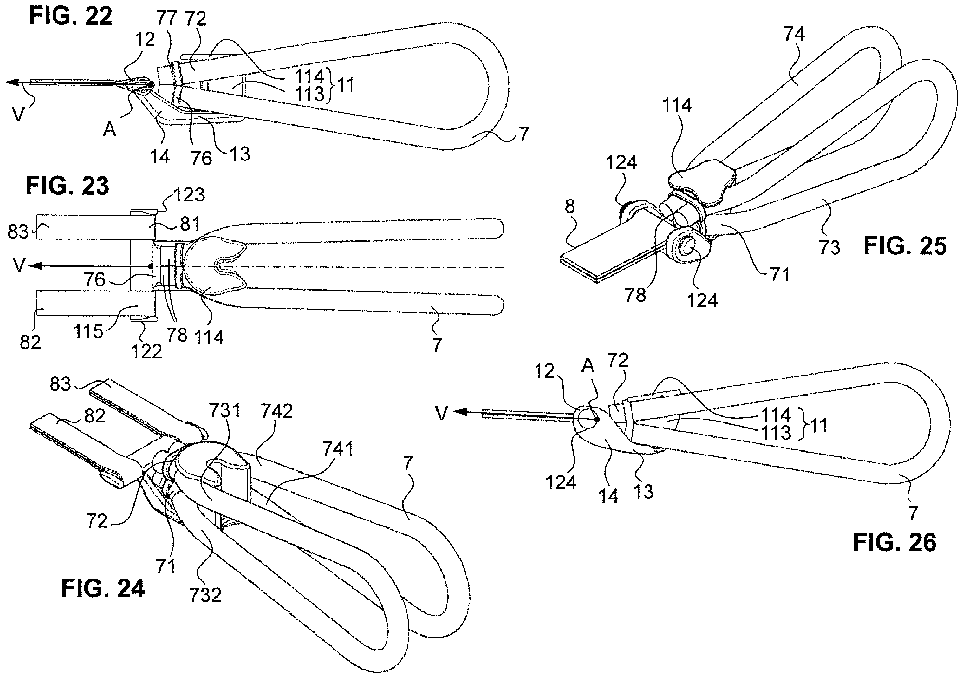

In den **Figuren 25-28** ist eine fünfte Ausführungsform des Seilhakens 10 dargestellt. Der Aufnahmeabschnitt 11 wird erneut durch einen trommelartigen Grundkörper 113 und eine das freie Ende dieses Grundkörpers 113 abdeckende plattenartige Überdeckung 114 gebildet. Die Überdeckung 114 ragt erneut gegen den Befestigungsabschnitt 12. Wie aus den Figuren erkennbar ist, verläuft eine Ausrichtung der plattenartige Überdeckung 114 nicht wie in den vorstehenden zweiten bis vierten Ausführungsformen senkrecht zur ersten Richtung R₁, sondern sie ist schräg zur ersten Richtung R₁ angeordnet. Im Wesentlichen ist die Überdeckung 114 auf den Ansatzpunkt A gerichtet. Wie insbesondere aus Figur 26 erkennbar ist, kann dadurch eine flächige Aufnahme des zweiten Schlaufenendabschnitts 72, dessen Stränge zum Rahmenabschnitt 90 hin auseinanderlaufen, erreicht werden. Insbesondere aus Figur 26 ist auch erkennbar, dass sich der gegenüber der Überdeckung 114 anschliessende Übergangsabschnitt 13, ähnlich wie die Überdeckung 114, gegen den Ansatzpunkt A gerichtet in die proximale Richtung erstreckt.

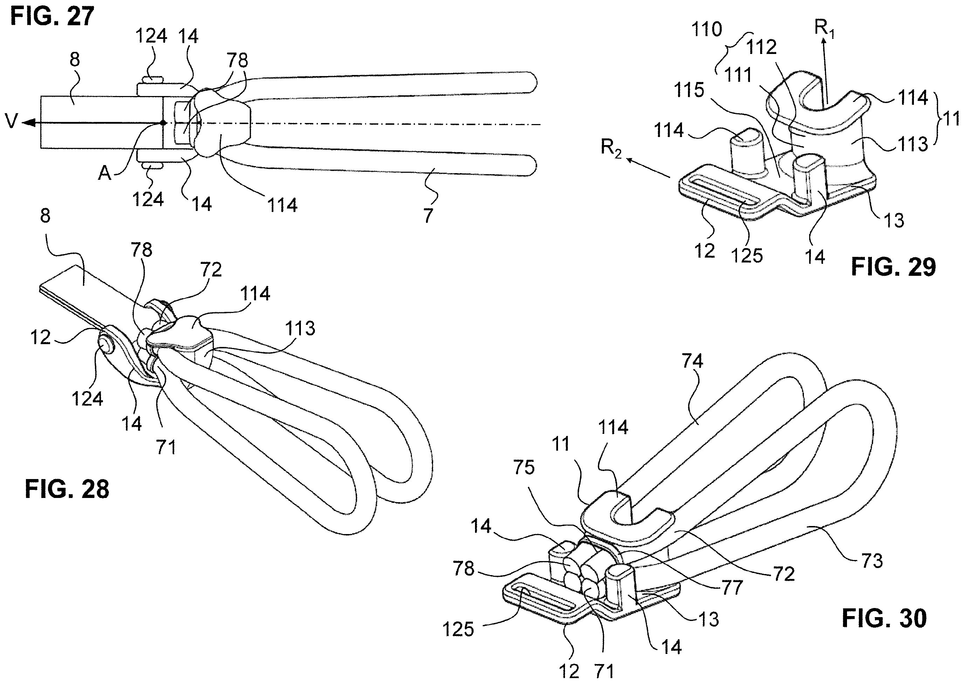

Aus Figur 28 ist weiter erkennbar, dass der Übergangsabschnitt 113 in seitliche Anlageelemente 14 übergeht, welche in proximaler Richtung kontinuierlich an Höhe zunehmen und im proximaler Bereich jeweils derart mit einer Öffnung versehen sind, dass ein in zweiter Richtung R₂ verlaufender Bolzen 124 in diesen Öffnungen gelagert ist, wobei dieser Bolzen den Befestigungsabschnitt 12 bereitstellt.

Figuren 25, 27 und 28 zeigen, dass der erste Schlaufenendabschnitt 71 mit den freien Abschnitten 78 zwischen die armartigen in die proximale Richtung ragenden Anlageelemente 14 in den Aufnahmeteilraum 115 greift und dort gegen seitliches verrutschen gesichert ist.

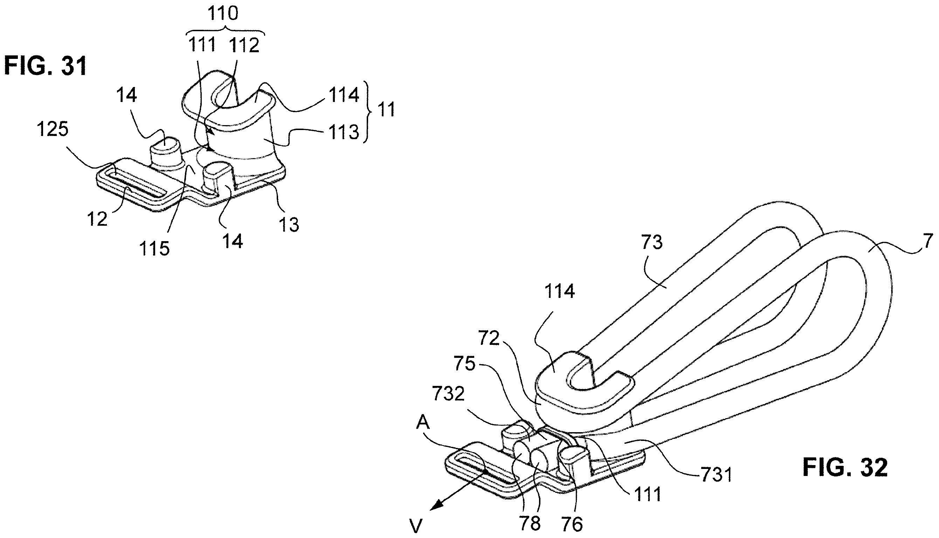

In den **Figuren 29, 30** ist eine sechste Ausführungsform des Seilhakens 10 mit der oben beschriebenen zweiten Ausführungsform der Seilschlaufe 7 und in den Figuren 31, 32 eine siebte Ausführungsform des Seilhakens 10 mit der dritten Ausführungsform der Seilschlaufe 7 dargestellt.

In der Figur 29 ist der erneut trommelartige, im Querschnitt U-förmige Grundkörper 113 des Seilhakens 10 erkennbar, welcher sich mit seiner Längsachse entlang der ersten Richtung R₁ erstreckt. Endseitig bezüglich der ersten Richtung R₁ ist der Grundkörper 113 durch eine gegen das Befestigungselement 12 ragende plattenartige Überdeckung 114 abgeschlossen. Die plattenartige Überdeckung überdeckt den Grundkörper 113 zu beiden Seiten und in proximale Richtung, d.h. gegen den Befestigungsabschnitt 12. Die Überdeckung 114 ist erneut, wie im Kontext der fünften Ausführungsform oben beschrieben, geneigt gegen den Ansatzpunkt A angeordnet. Dies lässt, wie in den Figuren 30, 32 erkennbar, einen flächenartigen Kontakt zwischen dem in den Aufnahmeabschnitt 11 eingehängten zweiten Schlaufenendabschnitt 72 und der gegen das den Seilhaken 10 gerichteten Fläche der Überdeckung 114 zu.

Die optimale Neigung der Überdeckung 114 hängt also vom Durchmesser des Trampolinrahmens 9, der Länge der Schlaufe 7 und der Hakengeometrie zusammen.

Am der plattenartigen Überdeckung 114 gegenüberliegenden Ende des Grundkörpers 113 ist der Übergangsabschnitt 13 angeordnet, welcher sich plattenartig vom Grundkörper 113 in die proximale Richtung erstreckt. Wie aus den Figuren erkennbar ist, verläuft der plattenartige Übergangsabschnitt 13 ebenfalls geneigt zur ersten Richtung R₁, wie das für die plattenartige Überdeckung 114 der Fall ist. Im proximalen Bereich des Übergangsabschnitts 13 sind zwei Anlageelemente 14 angeordnet, welche beabstandet zum Grundkörper 113 in die erste Richtung R₁ vom Übergangsabschnitt 13 abragen. Die Anlageelemente 14 sind monolithisch ausgestaltet und die gegeneinander gerichteten Seiten der Anlageelemente 14 sind gerundet ausgestaltet. Damit wird erzielt, dass der Schlaufe 7 keine scharfen Kanten entgegenstehen. Da der Übergangsabschnitt 13 den Grundkörper 113 seitlich überragt und die Anlageelemente 14 jeweils am seitlichen Rand des Übergangsabschnittes 13 angeordnet sind, bieten die Aufnahmeelemente 14 erneut einen Aufnahmeteilraum 115, in welchem die freien Abschnitte 78 der Schlaufe 7 aufgenommen werden können, womit eine seitliche Fixierung bereitgestellt ist. Der Aufnahmeteilraum 115 schliesst sich an den Aufnahmeraum 110 an. Wie aus den Figuren 29 und 30 erkennbar ist, sind die Anlageelemente 14 in der ersten Richtung R₁ jeweils derart hoch ausgestaltet, dass alle vier freien Abschnitte 78 im Aufnahmeteilraum 115 Platz finden. Eine Höhe der Anlageelemente 14 entlang der ersten Richtung R₁ ist also im Wesentlichen gleich gross wie der anderthalbfache bis doppelte Durchmesser des für die Schlaufe 7 verwendeten Seiles.

Eine Breite des Aufnahmeteilraums 115 ist im Allgemeinen vorzugsweise etwa doppelt so breit wie der Seildurchmesser.

Der Grundkörper 113 definiert erneut den Aufnahmeraum 110, welcher durch die Gerade g, die sich durch den Ansatzpunkt A des Befestigungsabschnittes 12 und senkrecht zur ersten Richtung R₁ erstreckt, in zwei Teilräume 111 und 112 zur Aufnahme des ersten und zweiten Schlaufenendabschnitts 71, 72 geteilt wird.

In Figur 30 ist gezeigt, wie eine Schlaufe 7 der zweiten Ausführungsform eingehängt ist. Entsprechend sind der erste Schlaufenendabschnitt 71 und der zweite Schlaufenendabschnitt 72 in den Aufnahmeraum 110, d.h. den ersten bzw. zweiten Teilraum 111, 112, eingelegt und werden von der plattenartige Überdeckung 114 und vom Übergangsabschnitt 13 im Aufnahmeraum 110 gehalten. Die freien Abschnitte 78 erstrecken sich vom Aufnahmeraum 110 in den Aufnahmeteilraum 115 und sind dort durch die seitliche Anlage an den Anlageelementen 14 gegen seitliches Verrutschen gesichert.

In proximale Richtung der Anlageelemente 14 erstreckt sich der nach oben gegen eine Mitte des Grundkörpers 113 angehobene Befestigungsabschnitt 12. Dieser Befestigungsabschnitt 12 ist plattenartig ausgebildet und weist einen proximal angeordneten Schlitz 125 auf, so dass eine Lasche gebildet ist, in welche ein Bandelement 8 (nicht dargestellt) eingehängt werden kann. Mittig bezüglich der zweiten Richtung R₂ auf der den Schlitz 125 gegen die proximale Richtung definierenden Oberfläche des Befestigungselementes 12 befindet sich erneut der Ansatzpunkt A, von welchem aus sich der Hauptzugvektor V in Richtung des Bandelementes in Spannlage erstreckt.

In den **Figuren 31** und **32** ist die siebte Ausführungsform des Seilhakens 10 dargestellt. Diese unterscheidet sich von der sechsten Ausführungsform lediglich durch eine Abragungshöhe der Anlageelemente 14. Wie in den Figuren erkennbar ist, sind die Anlageelemente 14 lediglich halb so hoch wie die Anlageelemente 14 der sechsten Ausführungsform ausgebildet. Entsprechend ist der Aufnahmeteilraum 115 weniger hoch ausgebildet und lediglich zur Aufnahme von zwei nebeneinanderliegenden freien Abschnitten 78 ausgebildet. Die siebte Ausführungsform des Seilhakens 10 eignet sich insbesondere für eine dritte Ausführungsform der Schlaufe 7.

In der dritten Ausführungsform der Schlaufe 7 wird lediglich ein erster Seilabschnitt 73 verwendet, welcher die beiden Endabschnitt 731 und 732 aufweist. Die Endabschnitte 731, 732 sind parallel und in die gleiche Richtung schauend durch ein Klemmelement 76 aneinander den ersten Schlaufenendabschnitt 71 bildend festgeklemmt. Entsprechend weist die dritte Ausführungsform der Schlaufe 7 lediglich einen Klemmbereich 75 auf, welcher im ersten Teilraum 111 des Aufnahmeraumes 110 aufgenommen wird, sodass dessen freie Abschnitte 78 vom Aufnahmeraum in den Aufnahmeteilraum 115 einragen und dort durch die Anlageelemente 14 gegen seitliches Verrutschen gesichert sind. Der zweite Schlaufenendabschnitt 72 wird durch einen dem Klemmbereich 75 bei ausgebreiteter Schlaufe 7 gegenüberliegenden Seilabschnitt gebildet.

Die sechste und siebte Ausführungsform des Seilhakens 10 weisen also stiftförmige, vom Übergangsabschnitt 13 abragende und einen Aufnahmeteilraum 115 bildende Anlageelemente 14 auf, welche zur von aussen bezügliche der Schlaufe 7 angreifenden seitlichen Fixierung des Klemmbereiches 75 dienen.

Der Befestigungsabschnitt ist hier als Lasche ausgebildet und die den Grundkörper 113 in der ersten Richtung R₁ begrenzende plattenartige Überdeckung 114 und der Übergangsabschnitt 13 sind plattenartig ausgebildet und gegeneinander in die proximale Richtung verlaufend angeordnet.

Die Ausführungsformen nach Figuren 29-32 können ebenfalls mit einem wie oben beschriebenen Vertikalkamm versehen sein. Zudem können die Befestigungsabschnitte 12 wie in den Ausführungsformen nach Figuren 15-26 ausgestaltet sein.

Es versteht sich, dass die verschiedenen Befestigungsabschnitte und die verschiedenen Hakenabschnitte der verschiedenen hier diskutierten Ausführungsformen untereinander beliebig kombinierbar sind. Es versteht sich auch, dass eine Neigung der plattenartigen Überdeckung 114 oder des Übergangsabschnittes 13 bezüglich der ersten Richtung R₁ von einem Durchmesser des Rohrabschnittes 90 des Trampolinrahmens 9 angepasst werden kann und bei allen Ausführungsformen ausgeformt sein kann. Im Weiteren können die verschiedenen Ausführungsformen der Schlaufe auch mit den verschiedenen Ausführungsformen der Seilhaken kombiniert werden.

Die Seilhaken 10 können in Spannlage nach oben oder nach unten offen orientiert im Befestigungssystem 100 die Schwungmatte 6 spannend verbaut sein. Vorzugsweise sind die Seilhaken 10 in Einbaulage nach unten offen, da so eine Verletzungsgefahr für den Benutzer beim Gebrauch des Trampolins 1 vermindert ist.

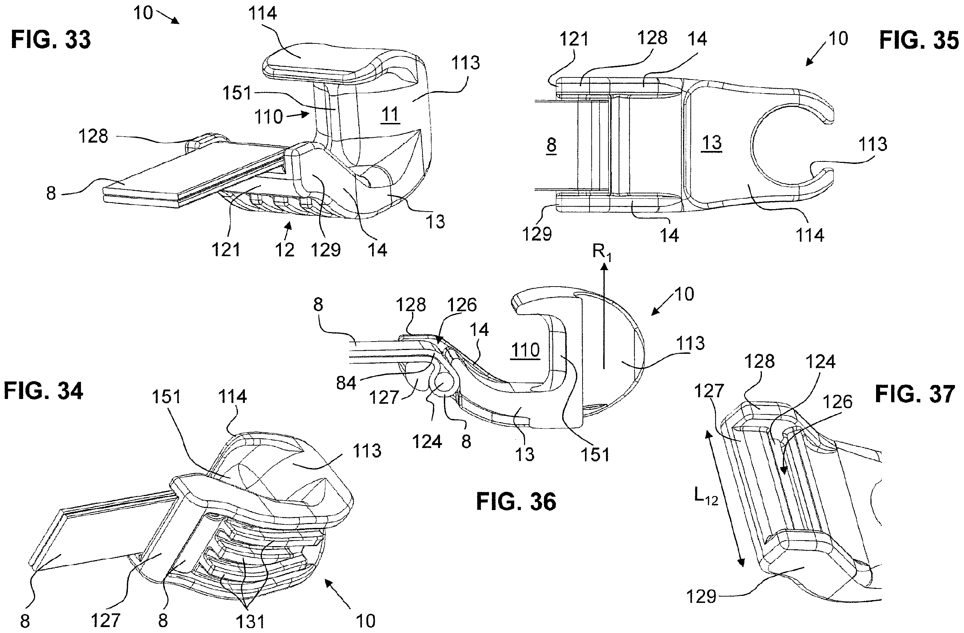

**Figuren 33** bis **35** zeigen in verschiedenen Ansichten eine achte Ausführungsform des Seilhakens 10. Dieser Seilhaken 10 weist erneut einen Aufnahmeabschnitt 11, einen Befestigungsabschnitt 12 und einen den Aufnahmeabschnitt 11 und den Befestigungsabschnitt 12 verbindenden Übergangsabschnitt 13 auf. Der proximal angeordnete Aufnahmeabschnitt 11 weist die Form eines distal aufgeschnittenen Hohlzylinders mit kreisförmigem Querschnitt auf, welcher sich entlang der Richtung R₁ erstreckt. Der Hohlraum und die distale Ausnehmung helfen, Material einzusparen und ein Design bereitzustellen, welches eine in etwa gleichbleibende Wandstärke aufweist, was vorteilhaft für die Herstellung des Seilhakens 10 ist.

Der Aufnahmeabschnitt 11 ist in der Figur 33 nach oben durch die Überdeckung 114 abgeschlossen. Diese Überdeckung 114 hilft erneut, dass ein eingehängter Seilabschnitt der Schlaufe 7 nicht aus dem Aufnahmeraum 110 rutscht.

Der Übergangsabschnitt 13 weist an der Überdeckung 114 gegenüberliegenden Seite eine Struktur von Rippen 131 auf (siehe Figur 34). In dieser Ausführungsform sind drei Rippen 131 vorgesehen, wobei die mittlere Rippe kürzer als die äusseren Rippen ausgebildet ist. Diese Rippenstruktur stabilisiert den Seilhaken 10 und hilft, Material einzusparen.

Der Übergangsabschnitt 13 geht in die proximale Richtung in zwei seitlich angebrachte Arme 128, 129 über, welche als an der Seitenkante des Übergangsabschnittes 13 und des Befestigungsabschnittes 12 angebrachte Wandelemente den Übergangsabschnitt 13 und dem Befestigungsabschnitt 12 seitlich begrenzen und abschnittsweise im distalen Bereich den Übergangsabschnitt 13 und den Befestigungsabschnitt 12 nach oben in Figur 33 überragen. Damit wirken diese Arme 128, 129 im distalen Bereich erneut als seitliches Anlageelement 14 zur Sicherung von freien Enden der Seilschlaufe 7 in Spannlage. Gegen das distale Ende hin verlaufen die Arme 128, 129 frei und sind an der distalen Kante durch ein quer verlaufendes Balkenelement 127 verbunden. Somit ist ein Schlitz 126 durch den Befestigungsabschnitt 12 gebildet, welcher entlang der Längserstreckung L₁₂ des Befestigungsabschnittes 12 verläuft. In anderen Worten kann man auch sagen, dass der Befestigungsabschnitt 12 im distalen Bereich einen entlang der Längserstreckung L₁₂ des Befestigungsabschnittes 12 verlaufenden Schlitz 126 aufweist, wobei der Schlitz in Richtung R*1* durchgehend ausgebildet ist, also von einer Oberseite bis zu einer Unterseite des Befestigungsabschnittes 12 erreicht. Dieser Schlitz 126 ist in der Detailansicht nach **Figur 37** ebenfalls erkennbar, wobei das im Schlitz 126 angeordnete Bolzenelement 124 sichtbar ist. Eine Breite des Schlitzes kann etwas mehr als die doppelte Materialstärke des Materials für die Bandelemente 8 betragen.

Auch bei der achten Ausführungsform des Seilhakens 10 ist zur Befestigung des Bandelementes 8 ein Bolzenelement 124 vorgesehen, wie dies bereits in der Ausführungsform nach den Figuren 25, 26 der Fall ist. Dieses Bolzenelement 124 ist in der Tiefe des Schlitzes 126 angebracht und zwar gegen die Rippen 131 hin (also nach unten in den Figuren 33, 36) versetzt. Die Figur 36 zeigt einen Längsschnitt durch den Seilhaken 10 und insbesondere auch einen Querschnitt durch dieses Bolzenelement 124. Die Versetzung des Bolzenelements 124 in den Bereich gegen die Rippen 131 hin, also nach unten in Figur 36, erlaubt, dass die Aufnahme des Bolzenelements 124 ebenfalls in diesem Bereich angeordnet ist. Zur Aufnahme des Bolzenelementes 124 werden typischerweise Ausnehmungen oder Löcher in die Arme 128, 129 eingebracht. Solche Ausnehmungen schwächen die Arme 128, 129 entsprechend. Damit diese Schwächung der Arme 128, 129 zu keiner oder nur einer minimalen Beeinträchtigung der Spannleistung des Seilhakens 10 führt, sind sie nach unten in Figur 36 versetzt angebracht. Als Konsequenz daraus vollzieht das eingehängte Bandelement 8 eine Umlenkung 84, wie es in Figur 36 gezeigt ist. Gleichzeitig stellt das Balkenelement 127 sicher, dass das Bandelement 8 auf der richtigen Höhe etwa mittig bezüglich des Aufnahmeraumes 110 eingeleitet wird, was vorteilhaft für die Lage des Hauptzugrektors V ist.

Zudem ist aus Figur 36 ersichtlich, dass der Schlitz 126 gegen die Seite der Rippen 131 hin aufgeweitet und gerundet ausgebildet ist. Die Rundung folgt im Wesentlichen der Rundung des zylinderförmigen Bolzenelementes 124, wobei die Aufweitung so platziert ist, dass sie das Bolzenelement 124 umgibt. Das Bolzenelement 124 weist hierbei eine kreisrunde Querschnittsform auf, wobei der Durchmesser so gewählt ist, dass der Biegeradius im Bandelement 8 keine übermässige Materialbeanspruchung im Material des Bandelementes 8 verursacht. Es ist auch denkbar, dass der Querschnitt des Bolzenelementes 124 eine andere Form aufweist.

Wie in Figur 36 gezeigt, wird nun das Bandelement 8 von oben in den Schlitz 126 eingeführt, um das Bolzenelement 124 geschlungen und wieder nach aussen geführt. Die Arme 128, 129 sind vorteilhafterweise so vorgesehen, dass sie seitlich das Balkenelement 127 nach oben in Figur 36 überragen, sodass das auf dem Balkenelement 127 auf liegende Bandelement 8 zusätzlich seitlich geführt ist. Wie aus der Figur 36 überdies ersichtlich ist, ist das Balkenelement 127 an dessen distalsten Ende ebenfalls gerundet ausgebildet, um der im Wesentlichen elliptischen Längsschnittform des Seilhakens 10 zu folgen.

Weiter ist aus den Figuren 33 bis 37 ersichtlich, dass der Seilhaken 10 in seiner Aussenform gerundet ausgebildet ist, sodass die Längsschnittform des Seilhakens 10 im Wesentlichen elliptisch ist. Diese Ausbildung hilft, Material einzusparen und minimiert erneut das Verletzungsrisiko. Dazu ist sowohl der Aufnahmeabschnitt 11 mitsamt der Überdeckung 114 als auch der Übergangsabschnitt 13 bzw. der Befestigungsabschnitt 12 entsprechend gerundet ausgebildet. Dies ist besonders gut ersichtlich in **Figur 36**, welche den Längsschnitt durch den Seilhaken 10 der achten Ausführungsform darstellt.

Überdies ist insbesondere aus Figur 35 ersichtlich, dass der Seilhaken 10 sich in die proximale Richtung, d.h. in Richtung des Aufnahmeabschnittes 11 in Richtung des Befestigungsabschnittes 12 verbreitert. Diese Verbreiterung ist auch bei der Überdeckung 114 umgesetzt. Die Verbreiterung beträgt ca. 10-20% einer Breite gemessen auf der Höhe der Zylinderachse des hohlzylinderförmigen Grundkörpers 113. Diese Verbreiterung trägt dem Umstand Rechnung, dass zum einen ein Durchmesser des Grundkörpers 113 so ausgestaltet sein kann, dass die Schlaufe 7 optimal im Aufnahmeraum 110 anliegt, insbesondere ohne zu stark geknickt zu sein bzw. ohne dass zu grosse Abmessungen des Seilhakens 10 vorliegen, und zum anderen eine Abmessung des Befestigungsabschnittes 12 in dessen Längserstreckung L₁₂ so lange ist, dass ein Bandelement 8 mit einer optimalen Breite von beispielsweise 10 Millimeter bis 20 Millimeter insbesondere etwa 15 Millimeter einlegbar ist. Es ist natürlich auch denkbar, dass die diesbezügliche Form des Seilhakens 10 anders ist, abhängig davon was für ein Material für das Bandelement 8 gewählt wird bzw. welche Breite das Bandelement 8 schlussendlich haben soll und was für Schlaufen 7 verwendet werden bzw. welchen Durchmesser der Aufnahmeabschnitt 11 aufweisen soll.

Das Vorsehen eines Bolzenelementes 124 im Befestigungsabschnitt 12 zur Aufnahme des Bandelementes 8 weist unabhängig von der konkreten Ausführungsform den Vorteil auf, dass die Bandelemente 8 in der Produktion bereits fest mit der Schwungmatte 6 vernäht oder sonst wie befestigt werden können, bevor der entsprechende Seilhaken 10 in das entsprechende Bandelement 8 eingehängt werden muss. Dadurch ist bspw. eine bessere Lagerung des Zwischenproduktes: Schwungmatte 6 mit befestigten Bandelementen 8 möglich. Zudem erlaubt eine mögliche Entnahme des Bolzenelementes 124 eine nachträgliche Auswechslung des einzelnen Seilhakens 10 im Defektfall.

Der Vorteil der Auswechselbarkeit ergibt sich natürlich auch aus Befestigungsabschnitten 12, welche ein Einhängen der Bandelemente 8 zulassen, welche also bspw. nach innen und/oder aussen offene Hakenelemente 122, 123 zum Einhängen des entsprechenden Bandelements 8 aufweisen.

Zudem weisen die Seilhaken 10 aller Ausführungsformen ausser jener nach Figuren 25 bis 37 offene Hakenelemente 122, 123 auf. Das Vorsehen der offenen Hakenelemente 122, 123 erlaubt, dass das Bandelement 8 bereits fest mit der Schwungmatte 6 verbunden, bspw. vernäht, ist und der Seilhaken 10 dann beim finalen Zusammenbau des Trampolins 1 einfach mit dem Befestigungsabschnitt 12 des Bandelements 8 eingehängt wird.

Es versteht sich, dass die unterschiedlich ausgebildeten Befestigungsabschnitte 12, Übergangsabschnitte 13 und Aufnahmeabschnitte 11 untereinander kombinierbar sind.

**BEZUGSZEICHENLISTE**

| | | | |
|---|---|---|---|
| 1 | Trampolin | | von 7 |
| 10 | Seilhaken | 73 | erster Seilabschnitt 7 |
| 100 | Befestigungssystem | 731 | erster Endabschnitt von 73 |
| | | 732 | zweiter Endabschnitt von 73 |
| 11 | Aufnahmeabschnitt | 74 | zweiter Seilabschnitt von 7 |
| 110 | Aufnahmeraum | 741 | erster Endabschnitt von 74 |
| 111 | erster Teilraum von 110 | 742 | zweiter Endabschnitt von 74 |
| 112 | zweiter Teilraum von 110 | 75 | Klemmbereich |
| 113 | Grundkörper, Trommelabschnitt | 76 | erstes Klemmelement |
| 114 | Überdeckung | 77 | zweites Klemmelement |
| 115 | Aufnahmeteilraum | 78 | freier Abschnitt von 7 |
| | | 791 | erste Schlaufe |
| 12 | Befestigungsabschnitt | 792 | zweite Schlaufe |
| 121 | freies Ende von 12 | | |
| 122 | erstes Hakenelement | 8 | flexibles Bandelement |
| 123 | zweites Hakenelement | 81 | distaler Endabschnitt von 8 |
| 124 | Stiftelement | 82 | erster Teil eines zweiteiligen |
| 125 | Ausnehmung | | Bandelements |
| 126 | Schlitz | 83 | zweiter Teil eines zweiteiligen |
| 127 | Balkenelement | | Bandelements |
| 128, 129 | Arm | 84 | Umlenkung von 8 |
| 13 | Übergangsabschnitt | | |
| 131 | Rippe | 9 90 | Trampolinrahmen Abschnitt von 9 |
| 14 | Anlageelement | | |
| 15 | Zusatzhülse | A | Ansatzpunkt |
| 151 | Vertikalkamm | g | Gerade |
| 152 | Grundkörper | L₁₁ | Längserstreckung von 11 |
| 153 | Endplatte | L₁₂ | Längserstreckung von 12 |
| 154 | Endplatte | R₁ | erste Richtung |
| | | R₂ | zweite Richtung |
| 6 | Schwungmatte | Rv | Richtung von V |
| | | V | Hauptzugvektor |
| 7 | Schlaufe | | |
| 71 | erster Schlaufenendabschnitt von 7 | | |
| 72 | zweiter Schlaufenendabschnitt | | |

## Patentansprüche

1. Seilhaken (10) zur Befestigung einer Schwungmatte (6) an einem Trampolinrahmen (9) mittels einer Seilschlaufe (7) und mindestens eines flexiblen Bandelements (8), der Seilhaken (10) umfassend:
einen distalen Aufnahmeabschnitt (11), wobei der Aufnahmeabschnitt (11) sich entlang einer ersten Richtung (R₁) erstreckt und einen Aufnahmeraum (110) zur Aufnahme eines ersten und eines zweiten Schlaufenendabschnitts (71,72) der Seilschlaufe (7) definiert;
einen proximalen Befestigungsabschnitt (12), welcher sich entlang einer zweiten Richtung (R₂) erstreckt und derart ausgebildet ist, dass ein distaler Endabschnitt (82) des mindestens einen flexiblen Bandelements (81) daran befestigbar ist und durch Zug an einem proximalen Endabschnitt (83) des mindestens einen flexiblen Bandelements (81) ein Hauptzugvektor (V) definiert ist;
einen Übergangsabschnitt (13), welcher den Aufnahmeabschnitt (11) und den Befestigungsabschnitt (12) verbindet und den Aufnahmeraum (110) einseitig begrenzt;
wobei der Seilhaken (10) so ausgebildet ist, dass eine Gerade (g) durch den Hauptzugvektor (V) des mit der Seilschlaufe (7) und dem mindestens einen flexiblen Bandelement (8) bestimmungsgemäss verspannten Seilhakens (10) den Aufnahmeraum (110) derart in einen ersten Teilraum (111) und einen zweiten Teilraum (112) unterteilt, dass im bestimmungsgemässen Gebrauch des Seilhakens (10) der erste Schlaufenendabschnitt (71) im ersten Teilraum (111) und der zweite Schlaufenendabschnitt (72) im zweiten Teilraum (112) liegt,
**dadurch gekennzeichnet, dass** der Seilhaken als ein einstückiges Kunststoffteil geformt ist; und
einen mittig in den Aufnahmeraum (110) ragenden Vertikalkamm (151) zur Zentrierung eines Klemmbereichs (75) einer Seilschlaufe (7) im Aufnahmeraum (110) aufweist; oder
mindestens ein den Aufnahmeraum (110) einengendes Anlageelement (14) vorgesehen ist, welches derart auf dem Übergangsabschnitt (13) angeordnet ist, dass sich das Anlageelement (14) in Richtung (R_{V}) des Hauptzugrektors (V) vom Aufnahmeabschnitt (11) beanstandet und zumindest abschnittsweise parallel zum Aufnahmeabschnitt (11) entlang der ersten Richtung (R₁) vom Übergangsabschnitt (13) wegerstreckt und den ersten Teilraum (111) und vorzugsweise auch den zweiten Teilraum (112) des Aufnahmeraums (110) seitlich proximal begrenzt und zur Zentrierung eines Klemmbereichs (75) einer Seilschlaufe (7) im Aufnahmeraum (110) geeignet ist.

2. Seilhaken (10) nach Anspruch 1, wobei die erste Richtung (R₁) und die zweite Richtung (R₂) quer zueinander verlaufen.

3. Seilhaken (10) nach Anspruch 1 oder 2, welcher weiter derart ausgebildet ist, dass die Gerade (g) durch den Hauptzugvektor (V) mittig bezüglich einer Längserstreckung (L₁₁) entlang der ersten Richtung (R₁) auf den Aufnahmeabschnitt (11) trifft.

4. Seilhaken (10) nach Ansprüchen 1 bis 3, welcher weiter derart ausgebildet ist, dass die Gerade (g) durch den Hauptzugvektor (V) mittig bezüglich einer Längserstreckung (L₁₂) entlang der zweiten Richtung (R₂) auf den Befestigungsabschnitt (12) trifft.

5. Befestigungssystem (100) zur Befestigung einer Schwungmatte (6) an einem Trampolinrahmen (9), wobei das Befestigungssystem (100) eine Vielzahl von Seilhaken (10) nach einem der Ansprüche 1 bis 4 und eine Vielzahl von vorzugsweise elastischen Seilschlaufen (7) umfasst, wobei das Befestigungssystem (100) vorzugsweise aus gleichvielen Seilhaken (10) wie elastische Seilschlaufen (7) und mindestens einem flexiblen Bandelement (8) für jeden Seilhaken (10) besteht.

6. Befestigungssystem (100) zur Befestigung einer Schwungmatte (6) an einem Trampolinrahmen (9), wobei das Befestigungssystem (100) eine Vielzahl von Seilhaken (10) und Seilschlaufen (7) umfasst, wobei das Befestigungssystem (100) nach Anspruch 5 ausgebildet ist, wobei die Seilschlaufe (7) aus einem ersten Seilabschnitt (73), oder aus einem ersten Seilabschnitt (73) und einem zweiten Seilabschnitt (74) gebildet ist, wobei jeder Seilabschnitt (73;74) jeweils einen ersten Endabschnitt (731;741) und einen zweiten Endabschnitt (732;742) aufweist, wobei der erste Endabschnitt (731) des ersten Seilabschnitts (73) an den zweiten Endabschnitt (732;742) des ersten oder gegebenenfalls des zweiten Seilabschnittes (73;74) in einem Klemmbereich (75) geklemmt ist, und der zweite Endabschnitt (732) des ersten Seilabschnitts (73) an den ersten Endabschnitt (731;741) des ersten bzw. des zweiten Seilabschnittes (73;74) in einem Klemmbereich (75) geklemmt ist, sodass die freien Abschnitte (78) derjenigen Endabschnitte (731,732;731,742;732,741), welche jeweils zusammengeklemmt sind, in die gleich Richtung zeigen, wobei der Klemmbereich (75) in den ersten oder zweiten Teilraum (111,112) des entsprechenden Seilhakens (10) einhängbar sind.

7. Befestigungssystem (100) zur Befestigung einer Schwungmatte (6) an einem Trampolinrahmen (9), wobei das Befestigungssystem (100) eine Vielzahl von Seilhaken (10) umfasst, wobei das Befestigungssystem (100) nach Anspruch 5 ausgebildet ist, wobei die Seilschlaufe (7) aus einem ersten Seilabschnitt (73) gebildet ist, wobei jeder Seilabschnitt (73) jeweils einen ersten Endabschnitt (731) und einen zweiten Endabschnitt (732) aufweist, und wobei die ersten und zweiten Endabschnitte (731,732) jeweils zu einer ersten und einer ersten und einer zweiten Schlaufe (791,792) umgebogen und jeweils mit mindestens einem Klemmelement (76) festgeklemmt sind, wobei die erste und zweite Schlaufe (791,792) in den ersten und zweiten Teilraum (111,112) des entsprechenden Seilhakens (10) einhängbar sind.

8. Trampolin (1) mit einer Schwungmatte (6) und einem Trampolinrahmen (9), wobei das Trampolin (1) weiter ein Befestigungssystem (100) nach einem der Ansprüche 5 bis 7 umfasst, mit welchem die Schwungmatte (6) im Trampolinrahmen (9) eingehängt ist.

9. Trampolin (1) nach Anspruch 8, umfassend ein Befestigungssystem (100) nach Ansprüchen 7 oder 8, wobei die Seilschlaufen (7) jeweils derart eingespannt sind, dass der Klemmbereich (75) jeweils im ersten oder im zweiten Teilraum (111; 112) entsprechenden Seilhakens (10) liegt, oder
umfassend ein Befestigungssystem (100) nach Anspruch 7, wobei die erste und zweite Schlaufe (791,792) in den ersten und zweiten Teilraum (111,112) des entsprechenden Seilhakens (10) eingehängt sind.

10. Verwendung eines Seilhakens (10) nach einem der Ansprüche 1 bis 4 oder eines Befestigungssystems (100) nach einem der Ansprüche 6 bis 8 zur Verbindung einer Schwungmatte (6) mit einem Trampolinrahmen (9).

11. Verfahren zur Befestigung einer Schwungmatte (6) an einem Trampolinrahmen (9),
i) Bereitstellen eines Befestigungssystems (100) nach einem der Ansprüche 5 bis 7;
ii) Umschlingen eines Abschnitts (90) des Trampolinrahmens (9) mit der Seilschlaufe (7) und Einhängen des ersten und des zweiten Schlaufenendabschnitts (71,72) in den Aufnahmeraum (110) des Seilhakens (10) zur Spannung der Schwungmatte (6) im Trampolinrahmen (9),
wobei die Seilhaken (10) vorzugsweise mittels von jeweils mindestens einem vorzugsweise flexiblen Bandelement (8) an der Schwungmatte (6) befestigt werden.

12. Verfahren zur Befestigung einer Schwungmatte (6) in einem Trampolinrahmen (9) mittels eines Befestigungssystems mit einer Vielzahl von Seilhaken (10) und elastischen Seilschlaufen (7) nach Anspruch 11, **dadurch gekennzeichnet, dass** die Seilschlaufe (7) aus einem ersten Seilabschnitt (73), oder aus einem ersten Seilabschnitt (73) und einem zweiten Seilabschnitt (74) gebildet ist, wobei jeder Seilabschnitt (73;74) jeweils einen ersten Endabschnitt (731;741) und einen zweiten Endabschnitt (732;742) aufweist, wobei der erste Endabschnitt (731) des ersten Seilabschnitts (73) an den zweiten Endabschnitt (732;742) des ersten oder gegebenenfalls des zweiten Seilabschnittes (73;74) in einem Klemmbereich (75) geklemmt ist, und der zweite Endabschnitt (732) des ersten Seilabschnitts (73) an den ersten Endabschnitt (731;741) des ersten bzw. des zweiten Seilabschnittes (73;74) in einem Klemmbereich (75) geklemmt ist, sodass die freien Abschnitte (78) derjenigen Endabschnitte (731,732;731,742;732,741), welche jeweils zusammengeklemmt sind, in die gleich Richtung zeigen, wobei der Klemmbereich (75) in den ersten oder zweiten Teilraum (111,112) des entsprechenden Seilhakens (10) eingehängt wird,
wobei die Seilhaken (10) nach Anspruch 4 ausgebildet sind und Anlageelemente (14) aufweisen, welche die freien Abschnitte (78) der Seilschlaufen (7) im Aufnahmeraum (110) fixieren.

13. Verfahren zur Befestigung einer Schwungmatte (6) in einem Trampolinrahmen (9) mittels eines Befestigungssystems mit einer Vielzahl von Seilhaken (10) und elastischen Seilschlaufen (7) nach Anspruch 11, **dadurch gekennzeichnet, dass** jeder Seilabschnitt (73) jeweils einen ersten Endabschnitt (731) und einen zweiten Endabschnitt (732) aufweist, und wobei die ersten und zweiten Endabschnitte (731,732) jeweils zu einer ersten und einer zweiten Schlaufe (791,792) umgebogen und jeweils mit mindestens einem Klemmelement (76) festgeklemmt sind, wobei die erste und zweite Schlaufe (791,792) in den ersten oder zweiten Teilraum (111,112) des entsprechenden Seilhakens (10) eingehängt sind.

## Claims

1. A cable hook (10) for fastening a trampoline mat (6) to a trampoline frame (9) by means of a cable loop (7) and at least one flexible band element (8), wherein the cable hook (10) comprises:
a distal receiving portion (11), wherein said receiving portion (11) is extending along a first direction (R₁) and defining a receiving space (110) for receiving a first and a second loop end portion (71, 72) of said cable loop (7);
a proximal attachment portion (12) extending along a second direction (R₂) and configured such that a distal end portion (82) of said at least one flexible band element (81) is attachable thereto and a main pull vector (V) is defined by pulling on a proximal end portion (83) of said at least one flexible band element (81);
a transition section (13) which connects the receiving section (11) and the attachment section (12) and delimits the receiving space (110) on one side;
wherein the cable hook (10) is designed in such a way that a straight line (g) through the main tension vector (V) of the cable hook (10), which is tensioned as intended with the cable loop (7) and the at least one flexible band element (8), divides the receiving space (110) in such a way into a first partial space (111) and a second partial space (112), in that, when the cable hook (10) is used as intended, the first loop end section (71) lies in the first partial space (111) and the second loop end section (72) lies in the second partial space (112),
**characterized in that** the cable hook is moulded as a one-piece plastic part; and
has a vertical comb (151) projecting centrally into the receiving space (110) for centring a clamping area (75) of a cable loop (7) in the receiving space (110); or
at least one contact element (14) is provided which constricts the receiving space (110) and is arranged on the transition section (13) in such a way. **in that** the contact element (14) is spaced apart from the receiving section (11) in the direction (Rv) of the main pulling rector (V) and extends away from the transition section (13) at least in sections parallel to the receiving section (11) along the first direction (R₁) and proximally delimits the first partial space (111) and preferably also the second partial space (112) of the receiving space (110) laterally and is suitable for centring a clamping region (75) of a cable loop (7) in the receiving space (110).

2. The cable hook (10) according to claim 1, wherein the first direction (R₁) and the second direction (R₂) are transverse to each other.

3. The cable hook (10) according to claim 1 or 2, which is further designed such that the straight line (g) through the main pull vector (V) meets the receiving portion (11) centrally with respect to a longitudinal extension (L₁₁) along the first direction (R₁).

4. The cable hook (10) according to claims 1 to 3, which is further designed such that the straight line (g) through the main tension vector (V) meets the fastening portion (12) centrally with respect to a longitudinal extension (L₁₂) along the second direction (R₂).

5. A fastening system (100) for fastening a trampoline mat (6) to a trampoline frame (9), wherein the fastening system (100) comprises a plurality of cable hooks (10) according to any one of claims 1 to 4 and a plurality of preferably elastic cable loops (7), wherein the fastening system (100) preferably consists of the same number of cable hooks (10) as elastic cable loops (7) and at least one flexible band element (8) for each cable hook (10).

6. An attachment system (100) for attaching a trampoline mat (6) to a trampoline frame (9), wherein the attachment system (100) comprises a plurality of cable hooks (10) and cable loops (7), wherein the attachment system (100) is formed according to claim 5, wherein the cable loop (7) is formed of a first cable section (73), or of a first cable section (73) and a second cable section (74), wherein each cable section (73) has a first end portion (731;741) and a second end portion (732;742), wherein the first end portion (731) of the first cable portion (73) is clamped to the second end portion (732;742) of the first or optionally the second cable portion (73;74) in a clamping region (75), and the second end portion (732) of the first cable portion (73) is clamped to the first end portion (731;741) of the first or optionally the second cable portion (73;74) in a clamping region (75), so that the free portions (78) of those end portions (731,732;731,742;732,741) which are clamped together respectively point in the same direction, wherein the clamping area (75) being adapted to be hooked into the first or second partial space (111,112) of the corresponding cable hook (10).

7. An attachment system (100) for attaching a trampoline mat (6) to a trampoline frame (9), wherein the attachment system (100) comprises a plurality of cable hooks (10), wherein the attachment system (100) is formed according to claim 5, wherein the cable loop (7) is formed from a first cable portion (73), wherein each cable portion (73) has a first end portion (731) and a second end portion (732), respectively, and wherein the first and second end portions (731, 732) are each bent over to form a first and a first and a second loop (791, 792) and are each clamped in place with at least one clamping element (76), wherein the first and second loops (791, 792) can be hooked into the first and second partial space (111, 112) of the corresponding cable hook (10).

8. A trampoline (1) with a trampoline mat (6) and a trampoline frame (9), the trampoline (1) further comprising a fastening system (100) according to one of claims 5 to 7, with which the trampoline mat (6) is suspended in the trampoline frame (9).

9. The trampoline (1) according to claim 8, comprising a fastening system (100) according to claims 7 or 8, wherein the cable loops (7) are each clamped in such a way that the clamping area (75) is located in the first or in the second partial space (111; 112) of the corresponding cable hook (10), or
comprising a fastening system (100) according to claim 7, wherein the first and second loops (791,792) are hooked into the first and second partial spaces (111,112) of the corresponding cable hook (10).

10. Use of a cable hook (10) according to any one of claims 1 to 4 or a fastening system (100) according to any one of claims 6 to 8 for connecting a trampoline mat (6) to a trampoline frame (9).

11. A method for fastening a trampoline mat (6) to a trampoline frame (9),
i) providing a fastening system (100) according to one of claims 5 to 7:
ii) looping a section (90) of the trampoline frame (9) with the cable loop (7) and hooking the first and second loop end sections (71, 72) into the receiving space (110) of the cable hook (10) for tensioning the trampoline mat (6) in the trampoline frame (9),
wherein the cable hooks (10) are preferably attached to the trampoline mat (6) by means of at least one preferably flexible band element (8) in each case.

12. The method for fastening a flying-mat (6) in a trampoline frame (9) by means of a fastening system with a plurality of cable hooks (10) and elastic cable loops (7) according to claim 11, **characterized in that** the cable loop (7) is formed from a first cable section (73), or from a first cable section (73) and a second cable section (74), wherein each cable section (73; 74) comprises a first end portion (731; 741) and a second end portion (732; 742), respectively, the first end portion (731) of the first cable portion (73) being clamped to the second end portion (732; 742) of the first or optionally the second cable portion (73; 74) in a clamping area (75), and the second end portion (732) of the first cable portion (73) being clamped to the first end portion (731; 741) of the first or optionally the second cable portion (73; 74) in a clamping area (75), and the second end portion (732) of the first cable portion (73) being clamped to the second end portion (732; 742) of the first or optionally the second cable portion (73; 74) in a clamping area (75). of the second cable portion (73;74) in a clamping area (75) so that the free portions (78) of those end portions (731,732;731,742;732,741) which are clamped together respectively point in the same direction, wherein the clamping area (75) is being hooked into the first or second partial space (111,112) of the corresponding cable hook (10),
wherein the cable hooks (10) are designed according to claim 4 and comprise contact elements (14) which fix the free sections (78) of the cable loops (7) in the receiving space (110).

13. The method for fastening a trampoline mat (6) in a trampoline frame (9) by means of a fastening system comprising a plurality of cable hooks (10) and elastic cable loops (7) according to claim 11, **characterized in that** each cable section (73) has a first end section (731) and a second end section (732), respectively, and wherein the first and second end portions (731, 732) are each bent over to form a first and a second loop (791, 792) and each clamped with at least one clamping element (76), wherein the first and second loops (791, 792) are hooked into the first or second partial space (111, 112) of the corresponding cable hook (10).

## Revendications

1. Crochet de câble (10) pour la fixation d'un tapis de trampoline (6) sur un cadre de trampoline (9) au moyen d'une boucle de câble (7) et d'au moins un élément de bande flexible (8), où le crochet de câble (10) comprend :
une partie de réception distale (11), ladite partie de réception (11) s'étendant dans une première direction (R₁) et définissant un espace de réception (110) pour recevoir une première et une deuxième partie d'extrémité de boucle (71, 72) de ladite boucle de câble (7);
une partie de fixation proximale (12) s'étendant le long d'une seconde direction (R₂) et configurée de telle sorte qu'une partie d'extrémité distale (82) dudit au moins un élément de bande flexible (81) puisse y être fixée et qu'un vecteur de traction principal (V) soit défini en tirant une partie d'extrémité proximale (83) dudit au moins un élément de bande flexible (81) ;
une section de transition (13) qui relie la section de réception (11) et la section de fixation (12) et définit l'espace de réception (110) sur un côté ;
où le crochet de câble (10) est conçu de telle manière qu'une ligne droite (g) passant par le vecteur de tension principal (V) du crochet de câble (10), qui est tendu comme prévu avec la boucle de câble (7) et le au moins un élément de bande flexible (8), divise l'espace de réception (110) de cette manière en un premier espace partiel (111) et un deuxième espace partiel (112), où, lorsque le crochet de câble (10) est utilisé comme prévu, la première section d'extrémité de la boucle (71) est située dans le premier espace partiel (111) et la deuxième section d'extrémité de la boucle (72) est située dans le deuxième espace partiel (112),
**caractérisé en ce que** le crochet de câble est moulé comme une pièce plastique intégrale ; et
comporte un peigne vertical (151) faisant saillie au centre de l'espace de réception (110) pour centrer une zone de serrage (75) d'une boucle de câble (7) dans l'espace de réception (110) ; ou
il est prévu au moins un élément de butée (14) qui rétrécit l'espace de réception (110) et qui est disposé de telle manière sur la section de transition (13), **en ce que** l'élément de contact (14) est espacé de la section de réception (11) dans la direction (Rv) du vecteur de tension principal (V) et s'étend à partir de la section de transition (13) au moins par sections parallèles à la section de réception (11) le long de la première direction (R₁) et délimite latéralement le premier espace partiel (111) et de préférence également le deuxième espace partiel (112) de l'espace de réception (110) et est approprié pour centrer une zone de serrage (75) d'une boucle de câble (7) dans l'espace de réception (110).

2. Crochet de câble (10) selon la revendication 1, dans lequel la première direction (R₁) et la deuxième direction (R₂) sont transversales l'une par rapport à l'autre.

3. Crochet de câble (10) selon la revendication 1 ou 2, qui est en outre formé de telle sorte que la ligne droite (g) passant par le vecteur de tension principal (V) rencontre la partie réceptrice (11) au centre par rapport à une extension longitudinale (L₁₁) le long de la première direction (R₁).

4. Crochet de câble (10) selon les revendications 1 à 3, qui est en outre conçu de telle sorte que la ligne droite (g) passant par le vecteur de tension principal (V) rencontre la partie de fixation (12) au centre par rapport à une extension longitudinale (L₁₂) le long de la deuxième direction (R₂).

5. Système de fixation (100) pour la fixation d'un mat de trampoline (6) sur un cadre de trampoline (9), le système de fixation (100) comprenant une pluralité de crochets de câble (10) selon l'une des revendications 1 à 4 et une pluralité de boucles de câble (7) de préférence élastiques, le système de fixation (100) étant de préférence constitué du même nombre de crochets de câble (10) que de boucles de câble (7) élastiques et d'au moins un élément de bande flexible (8) pour chaque crochet de câble (10).

6. Système de fixation (100) pour fixer un mat de trampoline (6) à un cadre de trampoline (9), le système de fixation (100) comprenant une pluralité de crochets de câble (10) et de boucles de câble (7), dans lequel le système de fixation (100) est formé selon la revendication 5, dans lequel la boucle de câble (7) est formée d'une première section de câble (73), ou d'une première section de câble (73) et d'une deuxième section de câble (74), dans lequel chaque section de câble (73; 74) ayant chacune une première partie d'extrémité (731 ; 741) et une deuxième partie d'extrémité (732 ; 742), dans lequel la première partie d'extrémité (731) de la première partie de câble (73) est serrée sur la deuxième partie d'extrémité (732 ; 742) de la première ou éventuellement de la deuxième partie de câble (73 ; 74) dans une région de serrage (75), et la deuxième partie d'extrémité (732) de la première partie de câble (73) est serrée sur la première partie d'extrémité (731 ; 741) de la première ou éventuellement de la deuxième partie de câble (73 ; 74) dans une région de serrage (75), de sorte que les parties libres (78) des parties d'extrémité (731,732 ; 731,742 ; 732,741) qui sont serrées ensemble soient respectivement dirigées dans la même direction, la région de serrage (75) pouvant être suspendue dans le premier ou le deuxième espace partiel (111,112) du crochet de câble (10) correspondant.

7. Système de fixation (100) pour fixer un mat de trampoline (6) à un cadre de trampoline (9), le système de fixation (100) comprenant une pluralité de crochets de câble (10), dans lequel le système de fixation (100) est formé selon la revendication 5, dans lequel la boucle de câble (7) est formée à partir d'une première partie de câble (73), chaque partie de câble (73) ayant une première partie d'extrémité (731) et une seconde partie d'extrémité (732), respectivement, et dans lequel les première et deuxième parties d'extrémité (731, 732) sont chacune repliées pour former une première et une première et une deuxième boucle (791, 792) et sont chacune serrées avec au moins un élément de serrage (76), dans lequel la première et la deuxième boucle (791, 792) peuvent être accrochées dans le premier et le deuxième espace partiel (111, 112) du crochet de câble (10) correspondant.

8. Trampoline (1) avec un mat de trampoline (6) et un cadre de trampoline (9), le trampoline (1) comprenant en outre un système de fixation (100) selon l'une des revendications 5 à 7, avec lequel le mat de trampoline (6) est suspendu dans le cadre de trampoline (9).

9. Trampoline (1) selon la revendication 8, comprenant un système de fixation (100) selon les revendications 7 ou 8, dans lequel les boucles de câble (7) sont respectivement serrées de telle sorte que la région de serrage (75) se trouve respectivement dans le premier ou le deuxième espace partiel (111 ; 112) du crochet de câble (10) correspondant, ou
comprenant un système de fixation (100) selon la revendication 7, dans lequel les première et deuxième boucles (791, 792) sont accrochées dans les premier et deuxième espaces partiels (111, 112) du crochet de câble (10) correspondant.

10. Utilisation d'un crochet de câble (10) selon l'une des revendications 1 à 4 ou d'un système de fixation (100) selon l'une des revendications 6 à 8 pour relier un mat de trampoline (6) à un cadre de trampoline (9).

11. Méthode de fixation d'un mat de trampoline (6) sur un cadre de trampoline (9),
i) fournir un système de fixation (100) selon l'une des revendications 5 à 7 ;
ii) enrouler la boucle de câble (7) autour d'une partie (90) du cadre du trampoline (9) et accrocher les première et deuxième parties d'extrémité de la boucle (71, 72) dans l'espace de réception (110) du crochet de câble (10) pour tendre le mat de trampoline (6) dans le cadre du trampoline (9),
dans lequel les crochets de câble (10) sont de préférence fixés au mat de trampoline (6) au moyen d'au moins un élément de bande (8) de préférence souple dans chaque cas.

12. Procédé de fixation d'un mat de trampoline (6) dans un cadre de trampoline (9) au moyen d'un système de fixation avec une pluralité de crochets de câble (10) et de boucles de câble élastiques (7) selon la revendication 11, **caractérisé en ce que** la boucle de câble (7) est formée à partir d'une première section de câble (73), ou d'une première section de câble (73) et d'une deuxième section de câble (74), où chaque section de câble (73 ; 74) comprend une première partie d'extrémité (731 ; 741) et une deuxième partie d'extrémité (732 ; 742), respectivement, la première partie d'extrémité (731) de la première partie de câble (73) étant serrée sur la deuxième partie d'extrémité (732 ; 742) de la première ou éventuellement de la deuxième partie de câble (73 ; 74) dans une région de serrage (75), et la deuxième partie d'extrémité (732) de la première partie de câble (73) étant serrée sur la première partie d'extrémité (731 ; 741) de la première ou éventuellement de la deuxième partie de câble (73 ; 74) dans une région de serrage (75), de sorte que les parties libres (78) des parties d'extrémité (731,732 ; 731,742 ; 732,741) qui sont serrées ensemble soient respectivement dirigées dans la même direction, la région de serrage (75) étant accrochée dans le premier ou le deuxième espace partiel (111,112) du crochet de câble (10) correspondant,
où les crochets de câble (10) sont conçus selon la revendication 4 et comprennent des éléments de contact (14) qui fixent les sections libres (78) des boucles de câble (7) dans l'espace de réception (110).

13. Procédé de fixation d'un mat de trampoline (6) dans un cadre de trampoline (9) au moyen d'un système de fixation comprenant une pluralité de crochets de câble (10) et de boucles de câble élastique (7) selon la revendication 11, **caractérisé en ce que** chaque partie de câble (73) a une première partie d'extrémité (731) et une deuxième partie d'extrémité (732), respectivement, et où les première et deuxième parties d'extrémité (731, 732) sont chacune repliées pour former une première et une deuxième boucle (791, 792) et sont chacune serrées avec au moins un élément de serrage (76), dans lequel les première et deuxième boucles (791, 792) sont accrochées dans le premier ou le deuxième espace partiel (111, 112) du crochet de câble (10) correspondant.
